# EUROPEAN PATENT APPLICATION

(11) **EP 4 810 939 A1**
(43) Date of publication of application: **23.09.2026**
(21) Application number: 26165553.4
(22) Date of filing: 17.03.2026
(51) Int. Cl.: G01N 15/1404

(54) **ANALYZING FLOW CYTOMETERS EXHIBITING REDUCED SAMPLE CARRYOVER AND METHODS OF USING THE SAME**

(30) Priority: 18.03.2025 US 202519083238
(71) Applicant: Becton Dickinson and Company, Franklin Lakes, NJ 07417-1880 (US)
(72) Inventor: Tucker, Lauren Rene, Franklin Lakes, 07417-1880 (US); Dembski, Kyle Thomas, Franklin Lakes, 07417-1880 (US)
(74) Representative: Arnold & Siedsma

(57) **Abstract**

Aspects of the present disclosure include analyzing flow cytometers that exhibit reduced sample carryover. To reduce sample carryover, analyzing flow cytometers of the invention are configured to bidirectionally transmit sheath fluid through a sample line of the analyzing flow cytometer. Also provided are methods of processing a sample using the disclosed analyzing flow cytometers.

## Description

### INTRODUCTION

The characterization of analytes in biological fluids has become an important part of biological research, medical diagnoses and assessments of overall health and wellness of a patient. Detecting analytes in biological fluids, such as human blood or blood derived products, can provide results that may play a role in determining a treatment protocol of a patient having a variety of disease conditions.

Flow cytometry is a technique used to characterize biological material, such as cells of a blood sample or particles of interest in another type of biological or chemical sample. A flow cytometer typically includes a sample reservoir for receiving a fluid sample, such as a blood sample, and a sheath reservoir containing a sheath fluid. The flow cytometer transports the particles (including cells) in the fluid sample as a cell stream to a flow cell, while also directing the sheath fluid to the flow cell. To characterize the components of the flow stream, the flow stream is irradiated with light. Variations in the materials in the flow stream, such as morphologies or the presence of fluorescent labels, may cause variations in the observed light and these variations allow for characterization and separation. To characterize the components in the flow stream, light must impinge on the flow stream and be collected. Light sources in flow cytometers can vary and may include one or more broad spectrum lamps, light emitting diodes as well as single wavelength lasers. The light source is aligned with the flow stream and an optical response from the illuminated particles is collected and quantified.

### SUMMARY

The inventors have realized that current flow cytometers exhibit a level of sample carryover when analyzing multiple samples. While some systems may flush a system with a flush solution or sheath fluid, this process may still exhibit carryover levels of up to 5%, i.e., up to 5% of cells analyzed are from a previous sample. This high level of sample carryover adds error to sample analysis, which can require additional flow cytometry or other scientific analysis to confirm any results. This process can add time and/or cost to a flow cytometric workflow.

The disclosure mitigates the carryover issue by applying alternating positive and negative pressure into a system. The alternating positive and negative pressure can provide a "scrubbing" effect to the sample line, thus reducing sample carryover. The positive and negative pressures may be repeated to increase the scrubbing effect. The application of pressure may be accomplished by using one or more pumps that are configured to bidirectionally move sheath fluid through a sample line, thereby providing the scrubbing effect to the sample line.

Analyzing flow cytometers according to the disclosure the present disclosure may include a flow cell with a sample line inlet, a sheath fluid injection port, and a waste fluid outlet; a sample line coupled to the sample line inlet and configured to receive a sample from a sample container; a sheath line coupled to the sheath fluid injection port and configured to transmit sheath fluid from a sheath fluid container to the sheath fluid injection port; a first pump fluidically coupled to the waste fluid outlet; a second pump fluidically coupled to the sheath line; and controller configured to direct the first pump, the second pump, or both to bidirectionally transmit sheath fluid through the sample line. In some embodiments, the controller is configured to alternate pressure from the first pump and the second pump to bidirectionally transmit sheath fluid through the sample line. In some embodiments, a valve is fluidically coupled to the first pump or the second pump, wherein the controller is further configured to direct the valve to alternate pressure from the first pump and the second pump to bidirectionally transmit sheath fluid through the sample line.

The controller may direct the first pump, the second pump, or both to apply positive and negative pressure to bidirectionally transmit sheath fluid through the sample line. The controller may direct the second pump to apply a positive pressure to the sheath line. The controller may direct the second pump to transmit sheath fluid from the sheath fluid container into the flow cell via the sheath line. Transmitting sheath fluid from the sheath fluid container into the flow cell via the sheath line may also transmit sheath fluid into the sample line. The controller may direct the first pump to apply a negative pressure to the flow cell via the waste fluid outlet. The first pump may be a vacuum pump.

Examples may apply a first application of positive and negative pressure as follows:
a. applying positive pressure of 1 to 5 psi for 500 to 2500 milliseconds (ms), and
b. applying negative pressure of 1 to 5 psi for 250 to 1000 ms.

A second application of positive and negative pressures may be applied as follows:
   c. applying positive pressure of 1 to 5 psi for 500 to 2500 ms, and
   d. applying negative pressure of 1 to 5 psi for 250 to 1000 ms.
A third application of positive pressure of may be applied:
   e. applying positive pressure of 1 to 5 psi for 250 to 1000 ms.
The positive and negative pressures may be applied as follows:
   a. applying positive pressure of 2 to 4.5 psi for 1000 milliseconds (ms),
   b. applying negative pressure of 2 to 4.5 psi for 500 ms,
A second application of positive and negative pressures may be applied as follows:
   c. applying positive pressure of 2 to 4.5 psi for 1000 ms, and
   d. applying negative pressure of 2 to 4.5 psi for 500 ms.
A third application of positive pressure of may be applied:
   e. applying positive pressure of 2 to 4.5 psi for 500 ms.
Following the application of pressures, the controller may be further configured to direct the first pump, the second pump, or both to neutralize pressure in the sample line. The analyzing flow cytometer may exhibit a sample carryover of 0.1% or less. The analyzing flow cytometer may exhibit a sample carryover of 0.05% or less

Examples further include a flow meter configured to determine flow of a fluid through the sample line. The flow meter may be located on the sample line between the first open end and the second outlet end.

Examples may further include a sample container receiving region configured to hold the sample container, a sample injection tube (SIT) assembly including the sample line, where the sample line includes a first open end configured to receive sample from the sample container present in the sample container receiving region, and a second outlet end configured to fluidically couple to the sample inlet port of the flow cell, where the SIT assembly further includes an outer sleave through which the sample line may pass and a waste line fluidically coupled to the waste fluid outlet of the flow cell.

Outer sleave may comprise a fluid outlet fluidically coupled with an aspiration pump. The controller may further be configured to direct the aspiration pump to aspirate fluid emitted from the first open end of the sample line. Aspirating the fluid emitted from the first open end may comprise directing the aspiration pump such that the emitted fluid enters the fluid outlet on the outer sleave. Examples may further include a valve fluidically coupled to the fluid outlet on the outer sleave and the aspiration pump, and wherein the controller is further configured to direct the opening and closing of the valve to allow the aspiration pump to aspirate fluid emitted from the first open end of the sample line.

Examples may further include a light source configured to irradiate the flow cell at an interrogation point. Examples may further include a detector configured to collect particle-modulated light from the flow cell. The analyzing flow cytometer may be an imaging flow cytometer.

Aspects of the disclosure further include methods of analyzing a sample, where the methods include introducing a particulate sample from a sample container into a flow cytometer, where the flow cytometer includes a flow cell with a sample line inlet, a sheath fluid injection port, and a waste fluid outlet; a sample line coupled to the sample line inlet and configured to receive a sample from a sample container; a sheath line coupled to the sheath fluid injection port and configured to transmit sheath fluid from a sheath fluid container to the sheath fluid injection port; a first pump fluidically coupled to the waste fluid outlet; a second pump fluidically coupled to the sheath line; and controller configured to direct the first pump, the second pump, or both to bidirectionally transmit sheath fluid through the sample line and flow cytometrically analyzing the sample. Such flow cytometers are summarized above. Some methods further include washing the sample line. Washing the sample line may include directing the controller to bidirectionally move sheath fluid through the sample line. The method may further include introducing a second particulate sample from a second sample container into the flow cytometer comprising and flow cytometrically analyzing the second sample.

### BRIEF DESCRIPTION OF THE FIGURES

The disclosure may be best understood from the following detailed description when read in conjunction with the accompanying drawings. Included in the drawings are the following figures:
**FIG.** 1 presents a schematic of an analyzing flow cytometer according to the present disclosure.
**FIG.** 2 presents a flow cytometric system according to the present disclosure.
**FIG.** 3 depicts an image-enabled particle analyzer according to the present disclosure.
**FIG.** 4 depicts a functional block diagram of a particle analysis system according to the present disclosure.
**FIG.** 5 depicts a depicts a functional block diagram for one example of a control system according to the present disclosure.
**FIG.** 6 depicts aspects of a computer-controlled system according to the present disclosure.

### DETAILED DESCRIPTION

Aspects of the present disclosure include analyzing flow cytometers that exhibit reduced carryover between samples analyzed in the flow cytometer. To reduce sample carryover, flow cytometers include a flow cell that includes a sample line inlet, a sheath fluid injection port, and a waste fluid outlet; a sample line coupled to the sample line inlet and configured to receive a sample from a sample container; a sheath line coupled to the sheath fluid injection port and configured to transmit sheath fluid from a sheath fluid container to the sheath fluid injection port; a first pump fluidically coupled to the waste fluid outlet; a second pump fluidically coupled to the sheath line; and a controller configured to direct the first pump, the second pump, or both to bidirectionally transmit sheath fluid through the sample line. The controller may be configured to alternate pressure from the first pump and the second pump to bidirectionally transmit sheath fluid through the sample line.

Where a range of values is provided, it is understood that each intervening value, to the tenth of the unit of the lower limit unless the context clearly dictates otherwise, between the upper and lower limit of that range and any other stated or intervening value in that stated range, is encompassed within the disclosure. The upper and lower limits of these smaller ranges may independently be included in the smaller ranges and are also encompassed within the disclosure, subject to any specifically excluded limit in the stated range. Where the stated range includes one or both of the limits, ranges excluding either or both of those included limits are also included in the disclosure.

Certain ranges are presented herein with numerical values being preceded by the term "about." The term "about" is used herein to provide literal support for the exact number that it precedes, as well as a number that is near to or approximately the number that the term precedes. In determining whether a number is near to or approximately a specifically recited number, the near or approximating unrecited number may be a number which, in the context in which it is presented, provides the substantial equivalent of the specifically recited number.

Unless defined otherwise, all technical and scientific terms used herein have the same meaning as commonly understood by one of ordinary skill in the art to which this disclosure belongs. Although any methods and materials similar or equivalent to those described herein can also be used in the practice or testing of the present disclosure, representative illustrative methods and materials are now described.

All publications and patents cited in this specification are herein incorporated by reference as if each individual publication or patent were specifically and individually indicated to be incorporated by reference and are incorporated herein by reference to disclose and describe the methods and/or materials in connection with which the publications are cited. The citation of any publication is for its disclosure prior to the filing date and should not be construed as an admission that the present disclosure is not entitled to antedate such publication by virtue of prior disclosure. Further, the dates of publication provided may be different from the actual publication dates which may need to be independently confirmed.

It is noted that, as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation.

### DEVICE/SYSTEM SECTION

As summarized above, aspects of the present disclosure exhibit reduced carryover between samples analyzed in a flow cytometer. The term "carryover" as used herein refers to unintended transfer of material from a sample to a subsequent sample being analyzed, including (but not limited to) particles, cells, and other objects from a sample that remain within an analyzing flow cytometer, including within a sample line or other component of the flow cytometer. The sample carryover may contaminate the subsequent sample being analyzed, causing possible error in its analysis. The reduced carryover disclosed herein reduces or otherwise limits contamination between samples that may affect analysis of each sample. An analyzing flow cytometer, as described herein, may exhibit reduced carryover by directing bidirectional flow through all or part of the flow cytometer-for example, the bidirectional flow may be effectuated within a sample line.The bidirectional flow may effectuate a "scrubbing" effect that reduces the carryover between samples. The bidirectional flow can be directed antegrade (e.g., generally, toward a waste container) and retrograde (e.g., generally, away from a waste container). The foregoing examples of antegrade and retrograde are merely exemplary, and fluid flow may be bidirectional (e.g., alternating antegrade and retrograde) in a sample line of the flow cytometer while remaining antegrade (or stagnant/non-moving) within other components of a flow cytometer (e.g., a flow cell and/or a waste line). As used herein, "sample line" refers to a conduit forming a fluid connection to a sample inlet of a flow cell and configured to transport a sample to the sample inlet of the flow cell. A flow cytometer may include one, two, or more sample lines in fluid connection with the sample inlet of the flow cell, each sample line configured to transport a sample to the sample inlet of the flow cell.

The bidirectional flow described above may be effectuated using one or both of positive and negative pressure. The positive and negative pressure may be effectuated using one or more pumps. Negative pressure may be effectuated using a vacuum pump. With this process of bidirectional flow, an analyzing flow cytometer may exhibit a sample carryover of 0.1% or less. The analyzing flow cytometer may exhibit a sample carryover of 0.05% or less. Sample carryover may be assessed using any convenient protocol. One protocol for assessing sample carryover is to run a wash well (a clean sample) immediately after each sample and compare the counts in the wash well to the counts in the original sample well. Comparison may be calculate using the formula: Carryover = (Count-wash well / Count - Sample well) x 100.

As summarized above, a flow cytometer may be an analyzing flow cytometer. The term "analyzing flow cytometer" refers to a flow cytometer configured for analyzing particles (including cells) suspended in a fluid stream. Fluid flow through an analyzing flow cytometer is typically connected to a waste container, such that the analyzed particles are disposed of as waste, rather than sorted and collected for further use or analysis. In analyzing flow cytometers, fluid flow may be driven by a vacuum pump connected to a waste line, which in turn may be fluidically coupled to the outlet of the flow cell, such that fluid may be drawn from the flow cell into the waste line under vacuum.

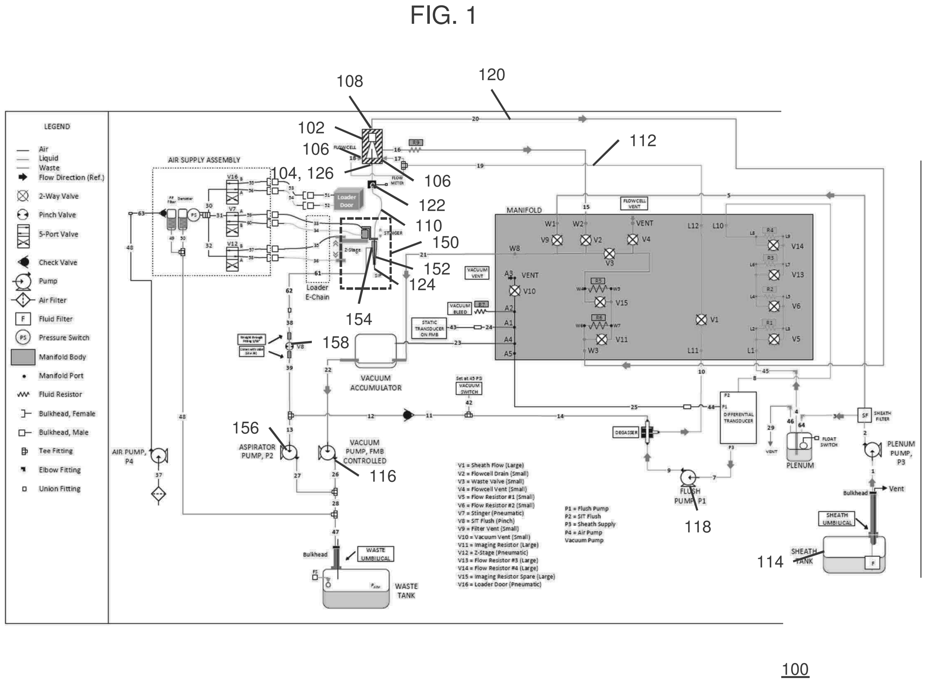

**FIG.** 1 illustrates a schematic of a fluidic system of an analyzing flow cytometer 100 in accordance with the disclosure described herein. Such analyzing flow cytometers may include a flow cell 102 that includes a sample line inlet 104, a sheath fluid injection port 106, and a waste fluid outlet 108. These analyzing flow cytometers may further include a sample line 110 coupled to the sample line inlet104 and configured to receive a sample from a sample container. A sheath line 112 may be coupled to the sheath fluid injection port 106 on the flow cell 102 and configured to transmit sheath fluid from a sheath fluid container 114 to the sheath fluid injection port 106 of the flow cell. As described previously, bidirectional flow within an analyzing flow cytometer may be accomplished by using one or more pumps. As such, an analyzing flow cytometer may include a first pump 116 fluidically coupled to the waste fluid outlet 108 of the flow cell and a second pump 118 fluidically coupled to the sheath line 112. A controller may be configured to direct the first pump 116 and/or the second pump 118 to bidirectionally transmit sheath fluid through the sample line 110. The controller may direct the one or more pumps to toggle between an "on" or "active" position to an "off" or "inactive" position. The controller may direct the one or more pumps by toggling a switch or other device between an on and an off position (or active/inactive positions). The on and off positions may connect a power supply to the pump, such as completing a circuit or otherwise routing power to the pump. The controller may be configured to alternate pressure from the first pump and the second pump to bidirectionally transmit sheath fluid through the sample line. "Bidirectionally transmit," as used herein refers to alternating flow direction between a retrograde and an antegrade flow.

A controller may direct the first pump 116 and/or second pump 118 to apply positive and negative pressure to bidirectionally transmit sheath fluid through the sample line 110. Negative pressure may be applied by reversing flow with a pump and/or by using a vacuum pump. Reversing flow through a pump can be accomplished by reversing the direction of the pump mechanically (e.g., via gears within the pump), by reversing electrical flow through a pump, and/or by routing fluid from the pump through an analyzing flow cytometer, such that the flow changes direction.

A first pump 116 may supply a negative pressure through the systems. The first pump may be a vacuum pump fluidically connected to the waste fluid outlet of the flow cell 108. The first pump 116 may be fluidically coupled to the waste fluid outlet by a waste line 120. When the first pump 116 provides a negative pressure, fluid present (e.g., excess sample, sheath fluid, etc.) can be transmitted in an antegrade direction through the flow cell 102 and waste fluid outlet 108.

An analyzing flow cytometer 100 may include a second pump 118 fluidically coupled to the sheath line112. The second pump 118 may be configured to provide a positive pressure to the sheath line 112. This positive pressure may be obtained by pumping sheath fluid from a sheath fluid container 114 into the flow cell 102 via the sheath line 112. Once the sheath fluid enters the flow cell 102, absent additional inputs, sheath fluid may flow retrograde through the sample line inlet 104 and sample line 110 and antegrade through the waste outlet 108-in this way, transmitting sheath fluid from the sheath fluid container 114 into the flow cell 102 via the sheath line 112 also transmits sheath fluid into the sample line 110.

An analyzing flow cytometer 100 may further include a valve, where the controller is further configured to direct the valve to alternate pressure from the first pump 116 and the second pump 118 to bidirectionally transmit sheath fluid through the sample line 110. The valve may stop (or limit) flow through one or more lines or pumps. Exemplary valves may include a pinch valve, a ball valve, a globe valve, a diaphragm valve, a butterfly valve, a gate valve, etc. The valve may alter a route that sheath fluid flows through an analyzing flow cytometer-for example a multi-way valve (e.g., 2-way valve, 3-way valve, 4-way valve, etc.) or a manifold configured to route flow via different conduits or lines within an analyzing flow cytometer.

As described above, the controller can be configured to alternate a positive and a negative pressure to the sample line. As noted, this alternating pressure can provide a "scrubbing" effect to the sample line to reduce sample carryover. The positive and negative pressure may be applied in any order (e.g., positive then negative or negative then positive). The applied pressures may be repeated an additional number of times, such as 1-10 applications of positive and/or negative pressure. For example, positive pressure and/or negative pressure may each be applied as 1 application, 2 applications, 3 applications, 4 applications, 5 applications, 6 applications, 7 applications, 8 applications, 9 applications, or 10 applications. The number of applications of pressure may be different, such as three applications of positive pressure and two applications of negative pressure. This foregoing example is meant to be illustrative only and is not limiting on the scope of the applications of pressure.

The positive pressure may be applied to the sample line at a pressure of 0.5 to 10 psi, such as 1 to 5 psi, e.g., 2 to 4.5 psi, while the negative pressure may be applied to the sample line at a pressure of 0.5 to 10 psi, such as 1 to 5 psi, e.g., 2 to 4.5 psi. When repeating the application of pressure, each subsequent pressure may be different-as a non-limiting example, a first application of positive pressure could be 2 to 5 psi, such as 3.5 to 4.5 psi, while a subsequent application of positive pressure could be 1 to 3 psi, such as 1.5 to 2.5 psi. The length of time for each application of pressure may be between 250 milliseconds to 2500 milliseconds. Each application may be for a different length of time. As a non-limiting example, a negative pressure may be applied for a shorter length of time than the positive pressure. The positive pressure may be applied for 500 to 2500 milliseconds, while the negative pressure is applied for 250 to 1000 milliseconds. As noted with the pressure magnitudes, subsequent applications of pressure may be for a different length of time-e.g., a first application of positive pressure could be for 1500 milliseconds, while a subsequent application of positive pressure could be for 1000 milliseconds.

For example, a first and second negative pressure may be applied as follows:
a. applying positive pressure of 1 to 5 for 500 psi to 2500 milliseconds (ms), and
b. applying negative pressure of 1 to 5 psi for 250 to 1000 ms,

A second application of positive and negative pressures may be applied as follows:
   c. applying positive pressure of 1 to 5 psi for 500 to 2500 ms, and
   d. applying negative pressure of 1 t0 5 psi for 250 to 1000 ms.
A third application of positive pressure may be applied of:
   e. applying positive pressure of 1 to 5 psi for 250 to 1000 ms.

The positive and negative pressures may be applied as follows:
a. applying positive pressure of 2 to 4.5 psi for 1000 milliseconds (ms),
b. applying negative pressure of 2 to 4.5 psi for 500 ms,

A second application of positive and negative pressures may be applied as follows:
   c. applying positive pressure of 2 to 4.5 psi for 1000 ms, and
   d. applying negative pressure of 2 to 4.5 psi for 500 ms.
A third application of positive pressure may be applied of:
   e. applying positive pressure of 2 to 4.5 psi for 500 ms.

The applied pressure may be dynamic and is regulated based on the flow through a sample line. An analyzing flow cytometer 100 may include a flow meter 122 configured to determine flow of fluid through the sample line 100. The flow meter 122 may be located on the sample line 100 between a first open 124 end and a second outlet end 126 (described further below), where the second outlet end 126 is coupled to the sample inlet 104 of the flow cell 102. Based on the flow rate and/or direction of flow, the controller may direct one or more of the first pump 116, the second pump 118, and the valve to alter the pressure applied to the sample line 110. For example, a flow rate that is too low may trigger an increase in magnitude of the applied pressure, while too fast of a flow rate may trigger a decrease in magnitude of the applied pressure.

Once the pressures have been alternated, e.g., as described above, the controller can direct the system to neutralize pressure. The controller may direct one or more pumps (e.g., first pump and second pump) and/or one or more valves to allow pressure to neutralize, such that flow within one or more of the sample line, the flow cell, the waste line, and the sheath line is stopped.

An analyzing flow cytometer may include a sample container receiving region configured to hold a sample container. Such receiving regions may include a platform, tube holder, rack, or other device for receiving a sample container. The sample container receiving region may be configured to cool, heat, move, or shake. Such abilities may assist with stabilizing a sample, ensuring a sample is dispersed in solution, and/or any other use for which a heating, cooling, or mobile platform may be worthwhile.

An analyzing flow cytometer may include a sample injection tube (SIT) assembly 150. SITs 150 may include the sample line 110, wherein the sample line includes a first open end 124 configured to receive sample from a sample container present in the sample container receiving region. The sample line 110 may further include a second outlet end 126 that is configured to fluidically couple to the sample inlet port 104 of the flow cell 102. The SIT assembly may also include an outer sleave 152 through which the sample line may pass. The outer sleave of the SIT assembly may include a fluid outlet 154. This fluid outlet 154 of the outer sleave 152 may be fluidically coupled to an aspiration pump 156. In this way, the aspiration pump 156 may be configured to aspirate a fluid (e.g., sheath fluid, excess sample, etc.) emitted from the first open end 124 of the sample line 110. As such, aspirating the fluid emitted from the first open end 124 comprises directing the aspiration pump 156 such that the emitted fluid enters the fluid outlet 154 on the outer sleave 152. The controller may be configured to direct the aspiration pump 156 to aspirate fluid emitted from the first open 124 end of the sample line 110 when the sample line is being washed. The controller can be configured to direct the aspiration pump 156 to aspirate fluid emitted from the first open 124 end of the sample line 110 when positive pressure is applied to the sample line 110 but not when negative pressure is applied to the sample line 110. The aspiration pump 156 can be toggled between an on/active position (e.g., to aspirate) to an off/inactive position (e.g., not to aspirate). The analyzing flow cytometer 110 may include a valve 158 fluidically coupled to the fluid outlet 154 on the outer sleave 152 and the aspiration pump 156. The valve 158 can be used to allow, disallow, regulate flow to the aspiration pump 156. The controller may be further configured to direct the opening and closing of the valve 158 to allow the aspiration pump 156 to aspirate fluid emitted from the first open end 124 of the sample line 110.

An analyzing flow cytometer 100 may include a flow cell 102, a sample container receiving region, and a sample injection tube (SIT) assembly 150. The SIT assembly 150 may include a sample line 110 that includes a first open end 124 configured to receive sample from a sample container present in a sample container receiving region and a second outlet end 126 configured to fluidically couple to a sample inlet port 104 of the flow cell 102. The SIT assembly 150 may further include an outer sleave 152 through which the sample line 110 may pass. An analyzing flow cytometer 100 may further include a sheath fluid line 112 configured to fluidically couple a sheath fluid reservoir 114 to a sheath fluid injection port 106 of the flow cell 102, a waste line 120 fluidically coupled to a waste outlet 108 of the flow cell 102, and a controller configured to bidirectionally move sheath fluid when present in the sample line 110. Additional details of a SIT assembly 150 are disclosed in US Pat. App. No.: 63/718,451(Attorney Docket No. BECT-386PRV/P-30353.US01PRO).

Flow cells of interest include a cuvette configured to transport particles in a flow stream. As discussed herein, a "flow cell" is described in its conventional sense to refer to a component containing a flow channel for a liquid flow stream for transporting particles in a sheath fluid. Cuvettes of interest have a passage (i.e., flow channel) running therethrough. The flow stream for which the flow channel is configured may include a liquid sample injected from a sample tube. In certain instances, the flow cell includes a light-accessible flow channel. The cuvette may be comprised of, e.g., quartz, glass, clear plastic, and the like. Cuvettes may be formed from silica, such as fused silica. In some cases, the flow cell is configured for irradiation with light from a light source at one or more interrogation points. The "interrogation point" discussed herein refers to a region within the flow cell in which the particle is irradiated by light from the light source, e.g., for analysis. The size of the interrogation point may vary as desired. For example, where 0 µm represents the optical axis of light emitted by the light source, the interrogation point may range from -50 µm to 50 µm, such as -25 µm to 40 µm, and including -15 µm to 30 µm. Depending on certain considerations (e.g., the number and arrangement of lasers), multiple irradiation points may exist within the flow cells.

The flow cell may include, or is configured for use with, a sample injection port configured to provide a sample to the flow cell. The sample injection system may be configured to provide suitable flow of sample to the flow cell inner chamber (i.e., flow channel). Depending on the desired characteristics of the flow stream, the rate of sample conveyed to the flow cell chamber by the sample injection port may be1 µL/min or more, such as 2 µL/min or more, such as 3 µL/min or more, such as 5 µL/min or more, such as 10 µL/min or more, such as 15 µL/min or more, such as 25 µL/min or more, such as 50 µL/min or more and including 100 µL/min or more, where in some instances the rate of sample conveyed to the flow cell chamber by the sample injection port is 1 pL/sec or more, such as 2 µL/sec or more, such as 3 µL/sec or more, such as 5 µL/sec or more, such as 10 µL/sec or more, such as 15 µL/sec or more, such as 25 µL/sec or more, such as 50 µL/sec or more and including 100 µL/sec or more.

The sample injection port may be an orifice positioned in a wall of the inner chamber or may be a conduit positioned at the proximal end of the inner chamber. Where the sample injection port is an orifice positioned in a wall of the inner chamber, the sample injection port orifice may be interchangeably referred to as a "sample line inlet." Where the sample injection port is an orifice positioned in a wall of the inner chamber, may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, etc., as well as irregular shapes, e.g., a parabolic bottom portion coupled to a planar top portion. the present disclosureThe sample injection port may have a circular orifice. The size of the sample injection port orifice may vary depending on shape, in certain instances, having an opening ranging from 0.1 mm to 5.0 mm, e.g., 0.2 to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm.

The sample injection port may be a conduit positioned at a proximal end of the flow cell inner chamber. For example, the sample injection port may be a conduit positioned to have the orifice of the sample injection port in line with the flow cell orifice. Where the sample injection port is a conduit positioned in line with the flow cell orifice, the sample injection port may be interchangeably referred to as a "sample line." Where the sample injection port is a conduit positioned in line with the flow cell orifice, the cross-sectional shape of the sample injection tube may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. The orifice of the conduit may vary depending on shape, in certain instances, having an opening ranging from 0.1 mm to 5.0 mm, e.g., 0.2 to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm. The shape of the tip of the sample injection port may be the same or different from the cross-section shape of the sample injection tube. For example, the orifice of the sample injection port may include a beveled tip having a bevel angle ranging from 1° to 10°, such as from 2° to 9°, such as from 3° to 8°, such as from 4° to 7° and including a bevel angle of 5°.

The flow cell may also include a sheath fluid injection port configured to provide a sheath fluid to the flow cell. The sheath fluid injection system may be configured to provide a flow of sheath fluid to the flow cell inner chamber, for example in conjunction with the sample to produce a laminated flow stream of sheath fluid surrounding the sample flow stream. Depending on the desired characteristics of the flow stream, the rate of sheath fluid conveyed to the flow cell chamber by the may be 25 µL/sec or more, such as 50 µL/sec or more, such as 75 µL/sec or more, such as 100 µL/sec or more, such as 250 µL/sec or more, such as 500 µL/sec or more, such as 750 µL/sec or more, such as 1000 µL/sec or more and including 2500 µL/sec or more.

The sheath fluid injection port may be an orifice positioned in a wall of the inner chamber. The sheath fluid injection port orifice may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. The size of the sheath fluid injection port orifice may vary depending on shape, in certain instances, having an opening ranging from 0.1 mm to 5.0 mm, e.g., 0.2 mm to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm.

Flow cytometers of the present disclosure include a light source configured to irradiate the particles in the flow stream at an interrogation point within the flow cell. The number of light sources in the flow cytometers may vary. The flow cytometers may include a single light source. Alternatively, flow cytometers may in some instances include a plurality of light sources. In some such instances, the number of light sources ranges from 2 to 10, such as 2 to 5, and including 2 to 4. Any convenient light source may be employed as the light source described herein. The light source may be a laser.The laser may be any convenient laser, such as a continuous wave laser. For example, the laser may be a diode laser, such as an ultraviolet diode laser, a visible diode laser and a near-infrared diode laser. The laser may be a helium-neon (HeNe) laser. In some instances, the laser is a gas laser, such as a helium-neon laser, argon laser, krypton laser, xenon laser, nitrogen laser, CO₂ laser, CO laser, argon-fluorine (ArF) excimer laser, krypton-fluorine (KrF) excimer laser, xenon chlorine (XeCl) excimer laser or xenon-fluorine (XeF) excimer laser or a combination thereof. In other instances, the subject flow cytometers include a dye laser, such as a stilbene, coumarin or rhodamine laser.Lasers of interest may include a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof. The subject flow cytometers may include a solid-state laser, such as a ruby laser, an Nd:YAG laser, NdCrYAG laser, Er:YAG laser, Nd:YLF laser, Nd:YVO₄ laser, Nd:YCa₄O(BO₃)₃ laser, Nd:YCOB laser, titanium sapphire laser, thulim YAG laser, ytterbium YAG laser, ytterbium₂O₃ laser or cerium doped lasers and combinations thereof.

Laser light sources the present disclosure may also include one or more optical adjustment components.The optical adjustment component may be located between the light source and the flow cell, and may include any device that is capable of changing the spatial width of irradiation or some other characteristic of irradiation from the light source, such as for example, irradiation direction, wavelength, beam width, beam intensity and focal spot. Optical adjustment protocols may include any convenient device which adjusts one or more characteristics of the light source, including but not limited to lenses, mirrors, filters, fiber optics, wavelength separators, pinholes, slits, collimating protocols and combinations thereof. In the present disclosure, flow cytometers of interest include one or more focusing lenses. The focusing lens, in one example, may be a de-magnifying lens. Flow cytometers of interest may include fiber optics.

The light source may be positioned any suitable distance from the flow cell, such as where the light source and the flow cell are separated by 0.005 mm or more, such as 0.01 mm or more, such as 0.05 mm or more, such as 0.1 mm or more, such as 0.5 mm or more, such as 1 mm or more, such as 5 mm or more, such as 10 mm or more, such as 25 mm or more and including at a distance of 100 mm or more. In addition, the light source may be positioned at any suitable angle relative to the flow cell, such as at an angle ranging from 10 degrees to 90 degrees, such as from 15 degrees to 85 degrees, such as from 20 degrees to 80 degrees, such as from 25 degrees to 75 degrees and including from 30 degrees to 60 degrees, for example at a 90 degree angle.

Light sources of interest may include a plurality of lasers configured to provide laser light for discrete irradiation of the flow stream, such as 2 lasers or more, such as 3 lasers or more, such as 4 lasers or more, such as 5 lasers or more, such as 10 lasers or more, and including 15 lasers or more configured to provide laser light for discrete irradiation of the flow stream. Depending on the desired wavelengths of light for irradiating the flow stream, each laser may have a specific wavelength that varies from 200 nm to 1500 nm, such as from 250 nm to 1250 nm, such as from 300 nm to 1000 nm, such as from 350 nm to 900 nm and including from 400 nm to 800 nm. In the present disclosure, lasers of interest may include one or more of a 405 nm laser, a 488 nm laser, a 561 nm laser and a 635 nm laser.

The light source may be a light beam generator that is configured to generate two or more beams of frequency shifted light. The light beam generator may include a laser, a radiofrequency generator configured to apply radiofrequency drive signals to an acousto-optic device to generate two or more angularly deflected laser beams. The laser may be a pulsed lasers or continuous wave laser. For example, lasers in light beam generators of interest include those listed above.

The acousto-optic device may be any convenient acousto-optic protocol configured to frequency shift laser light using applied acoustic waves. In the present disclosure, the acousto-optic device is an acousto-optic deflector. The acousto-optic device in the subject system is configured to generate angularly deflected laser beams from the light from the laser and the applied radiofrequency drive signals. The radiofrequency drive signals may be applied to the acousto-optic device with any suitable radiofrequency drive signal source, such as a direct digital synthesizer (DDS), arbitrary waveform generator (AWG), or electrical pulse generator.

A controller may be configured to apply radiofrequency drive signals to the acousto-optic device to produce the desired number of angularly deflected laser beams in the output laser beam, such as being configured to apply 3 or more radiofrequency drive signals, such as 4 or more radiofrequency drive signals, such as 5 or more radiofrequency drive signals, such as 6 or more radiofrequency drive signals, such as 7 or more radiofrequency drive signals, such as 8 or more radiofrequency drive signals, such as 9 or more radiofrequency drive signals, such as 10 or more radiofrequency drive signals, such as 15 or more radiofrequency drive signals, such as 25 or more radiofrequency drive signals, such as 50 or more radiofrequency drive signals and including being configured to apply 100 or more radiofrequency drive signals.

To produce an intensity profile of the angularly deflected laser beams in the output laser beam, the controller may be configured to apply radiofrequency drive signals having an amplitude that varies such as from about 0.001 V to about 500 V, such as from about 0.005 V to about 400 V, such as from about 0.01 V to about 300 V, such as from about 0.05 V to about 200 V, such as from about 0.1 V to about 100 V, such as from about 0.5 V to about 75 V, such as from about 1 V to 50 V, such as from about 2 V to 40 V, such as from 3 V to about 30 V and including from about 5 V to about 25 V. Each applied radiofrequency drive signal may have , a frequency of from about 0.001 MHz to about 500 MHz, such as from about 0.005 MHz to about 400 MHz, such as from about 0.01 MHz to about 300 MHz, such as from about 0.05 MHz to about 200 MHz, such as from about 0.1 MHz to about 100 MHz, such as from about 0.5 MHz to about 90 MHz, such as from about 1 MHz to about 75 MHz, such as from about 2 MHz to about 70 MHz, such as from about 3 MHz to about 65 MHz, such as from about 4 MHz to about 60 MHz and including from about 5 MHz to about 50 MHz.

The controller may have a processor having memory operably coupled to the processor such that the memory includes instructions stored thereon, which when executed by the processor, cause the processor to produce an output laser beam with angularly deflected laser beams having a desired intensity profile. For example, the memory may include instructions to produce two or more angularly deflected laser beams with the same intensities, such as 3 or more, such as 4 or more, such as 5 or more, such as 10 or more, such as 25 or more, such as 50 or more and including memory may include instructions to produce 100 or more angularly deflected laser beams with the same intensities. The memory may include instructions to produce two or more angularly deflected laser beams with different intensities, such as 3 or more, such as 4 or more, such as 5 or more, such as 10 or more, such as 25 or more, such as 50 or more and including memory may include instructions to produce 100 or more angularly deflected laser beams with different intensities.

The controller may have a processor having memory operably coupled to the processor such that the memory includes instructions stored thereon, which when executed by the processor, cause the processor to produce an output laser beam having increasing intensity from the edges to the center of the output laser beam along the horizontal axis. In these instances, the intensity of the angularly deflected laser beam at the center of the output beam may range from 0.1% to about 99% of the intensity of the angularly deflected laser beams at the edge of the output laser beam along the horizontal axis, such as from 0.5% to about 95%, such as from 1% to about 90%, such as from about 2% to about 85%, such as from about 3% to about 80%, such as from about 4% to about 75%, such as from about 5% to about 70%, such as from about 6% to about 65%, such as from about 7% to about 60%, such as from about 8% to about 55% and including from about 10% to about 50% of the intensity of the angularly deflected laser beams at the edge of the output laser beam along the horizontal axis. The controller may have a processor having memory operably coupled to the processor such that the memory includes instructions stored thereon, which when executed by the processor, cause the processor to produce an output laser beam having an increasing intensity from the edges to the center of the output laser beam along the horizontal axis. In these instances, the intensity of the angularly deflected laser beam at the edges of the output beam may range from 0.1% to about 99% of the intensity of the angularly deflected laser beams at the center of the output laser beam along the horizontal axis, such as from 0.5% to about 95%, such as from 1% to about 90%, such as from about 2% to about 85%, such as from about 3% to about 80%, such as from about 4% to about 75%, such as from about 5% to about 70%, such as from about 6% to about 65%, such as from about 7% to about 60%, such as from about 8% to about 55% and including from about 10% to about 50% of the intensity of the angularly deflected laser beams at the center of the output laser beam along the horizontal axis. The controller may have a processor having memory operably coupled to the processor such that the memory includes instructions stored thereon, which when executed by the processor, cause the processor to produce an output laser beam having an intensity profile with a Gaussian distribution along the horizontal axis. The controller may have a processor having memory operably coupled to the processor such that the memory includes instructions stored thereon, which when executed by the processor, cause the processor to produce an output laser beam having a top hat intensity profile along the horizontal axis.

Light beam generators of interest may be configured to produce angularly deflected laser beams in the output laser beam that are spatially separated. Depending on the applied radiofrequency drive signals and desired irradiation profile of the output laser beam, the angularly deflected laser beams may be separated by 0.001 µm or more, such as by 0.005 µm or more, such as by 0.01 µm or more, such as by 0.05 µm or more, such as by 0.1 µm or more, such as by 0.5 µm or more, such as by 1 µm or more, such as by 5 µm or more, such as by 10 µm or more, such as by 100 µm or more, such as by 500 µm or more, such as by 1000 µm or more and including by 5000 µm or more.The system may be configured to produce angularly deflected laser beams in the output laser beam that overlap, such as with an adjacent angularly deflected laser beam along a horizontal axis of the output laser beam. The overlap between adjacent angularly deflected laser beams (such as overlap of beam spots) may be an overlap of 0.001 µm or more, such as an overlap of 0.005 µm or more, such as an overlap of 0.01 µm or more, such as an overlap of 0.05 µm or more, such as an overlap of 0.1 µm or more, such as an overlap of 0.5 µm or more, such as an overlap of 1 µm or more, such as an overlap of 5 µm or more, such as an overlap of 10 µm or more and including an overlap of 100 µm or more.

Light beam generators configured to generate two or more beams of frequency shifted light may include laser excitation modules as described in U.S. Patent Nos. 9,423,353; 9,784,661; 9,983,132; 10,006,852; 10,036,699; 10,078,045; 10,222,316; 10,288,546; 10,324,019; 10,408,758; 10,451,538; 10,620,111; 10,684,211; 10,845,295; 10,935,482; 10,935,485; 11,105,728; 11,280,718; 11,327,016; 11,366,052; 11,371,937; 11,692,926; 11,630,053; 11,774,343; 11,940,369; and 11,946,851.

In addition, flow cytometers include a detector configured to collect light emitted by the irradiated particles. The light detectors are configured to detect particle-modulated light conveyed by the fiber optic light collection elements and generate signals based on a characteristic of that light (e.g., intensity). For example, the one or more particle-modulated light detector(s) may include one or more side-scattered light detectors for detecting side-scatter wavelengths of light (i.e., light refracted and reflected from the surfaces and internal structures of the particle). Flow cytometers may include a single side-scattered light detector. Flow cytometers may include multiple side-scattered light detectors, such as 2 or more, such as 3 or more, such as 4 or more, and including 5 or more.

Any convenient detector for detecting collected light may be used in the side-scattered light detector described herein. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In the present disclosure, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In the present disclosure, the detector is a photomultiplier tube, such as a photomultiplier tube having an active detecting surface area of each region that ranges from 0.01 cm² to 10 cm², such as from 0.05 cm² to 9 cm², such as from 0.1 cm² to 8 cm², such as from 0.5 cm² to 7 cm² and including from 1 cm² to 5 cm².

The subject flow cytometers may also include a fluorescent light detector configured to detect one or more fluorescent wavelengths of light. Flow cytometers may include multiple fluorescent light detectors such as 2 or more, such as 3 or more, such as 4 or more, 5 or more, 10 or more, 15 or more, and including 20 or more.

Any convenient detector for detecting collected light may be used in the fluorescent light detector described herein. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In the present disclosure, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In the present disclosure, the detector is a photomultiplier tube, such as a photomultiplier tube having an active detecting surface area of each region that ranges from 0.01 cm² to 10 cm², such as from 0.05 cm² to 9 cm², such as from, such as from 0.1 cm² to 8 cm², such as from 0.5 cm² to 7 cm² and including from 1 cm² to 5 cm².

Where the subject flow cytometers include multiple fluorescent light detectors, each fluorescent light detector may be the same, or the collection of fluorescent light detectors may be a combination of different types of detectors. For example, where the subject flow cytometers include two fluorescent light detectors, the first fluorescent light detector may be a CCD-type device and the second fluorescent light detector (or imaging sensor) may be a CMOS-type device. Both the first and second fluorescent light detectors may be CCD-type devices. Both the first and second fluorescent light detectors may be CMOS-type devices. The first fluorescent light detector may be a CCD-type device and the second fluorescent light detector is a photomultiplier tube (PMT). The first fluorescent light detector may be a CMOS-type device and the second fluorescent light detector is a photomultiplier tube. Both the first and second fluorescent light detectors may be photomultiplier tubes.

Fluorescent light detectors of interest may be configured to measure collected light at one or more wavelengths, such as at 2 or more wavelengths, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring light emitted by a sample in the flow stream at 400 or more different wavelengths. 2 or more detectors in the modules as described herein may be configured to measure the same or overlapping wavelengths of collected light.

Fluorescent light detectors of interest may be configured to measure collected light over a range of wavelengths (e.g., 200 nm - 1000 nm). Detectors of interest may be configured to collect spectra of light over a range of wavelengths. For example, flow cytometers may include one or more detectors configured to collect spectra of light over one or more of the wavelength ranges of 200 nm - 1000 nm. Detectors of interest may be configured to measure light emitted by a sample in the flow stream at one or more specific wavelengths. For example, modules may include one or more detectors configured to measure light at one or more of 450 nm, 518 nm, 519 nm, 561 nm, 578 nm, 605 nm, 607 nm, 625 nm, 650 nm, 660 nm, 667 nm, 670 nm, 668 nm, 695 nm, 710 nm, 723 nm, 780 nm, 785 nm, 647 nm, 617 nm and any combinations thereof. In the present disclosure, one or more detectors may be configured to be paired with specific fluorophores, such as those used with the sample in a fluorescence assay.

Flow cytometers may include any suitable mechanism(s) for providing sheath fluid and sample fluid to the sample fluid input coupler and sheath fluid input coupler. For example, the sample fluid input coupler may be fluidically connected to a sample fluid line (e.g., tubing) fluidically connected to a sample fluid reservoir. Similarly, the sheath fluid input coupler may be fluidically connected to a sheath fluid line fluidically connected to a sheath fluid reservoir. Similarly, flow cytometers may include any suitable mechanism(s) for managing waste from the flow stream. The fluidic output coupler may be fluidically connected to a waste line fluidically connected to a waste reservoir. Fluid management systems that may be adapted for use in the subject flow cytometers are provided in U.S. Patent Application Publication No. 2022/0341838.

Suitable flow cytometry systems may include, but are not limited to those described in Ormerod (ed.), Flow Cytometry: A Practical Approach, Oxford Univ. Press (1997); Jaroszeski et al. (eds.), Flow Cytometry Protocols, Methods in Molecular Biology No. 91, Humana Press (1997); Practical Flow Cytometry, 3rd ed., Wiley-Liss (1995); Virgo, et al. (2012) Ann Clin Biochem. Jan;49(pt 1): 17-28; Linden, et. al., Semin Throm Hemost. 2004 Oct;30(5):502-11; Alison, et al. J Pathol, 2010 Dec; 222(4):335-344; and Herbig, et al. (2007) Crit Rev Ther Drug Carrier Syst. 24(3):203-255; In certain instances, flow cytometry systems of interest include BD Biosciences FACSCanto^{™} flow cytometer, BD Biosciences FACSCanto^{™} II flow cytometer, BD Accuri^{™} flow cytometer, BD Accuri^{™} C6 Plus flow cytometer, BD Biosciences FACSCelesta^{™} flow cytometer, BD Biosciences FACSLyric^{™} flow cytometer, BD Biosciences FACSVerse^{™} flow cytometer, BD Biosciences FACSymphony^{™} flow cytometer, BD Biosciences LSRFortessa^{™} flow cytometer, BD Biosciences LSRFortessa^{™} X-20 flow cytometer, BD Biosciences FACSPresto^{™} flow cytometer, BD Biosciences FACSVia^{™} flow cytometer, or the like.

The subject system may be a flow cytometric system, such those described in U.S. Patent Nos. 10,663,476; 10,620,111; 10,613,017; 10,605,713; 10,585,031; 10,578,542; 10,578,469; 10,481,074; 10,302,545; 10,145,793; 10,113,967; 10,006,852; 9,952,076; 9,933,341; 9,726,527; 9,453,789; 9,200,334; 9,097,640; 9,095,494; 9,092,034; 8,975,595; 8,753,573; 8,233,146; 8,140,300; 7,544,326; 7,201,875; 7,129,505; 6,821,740; 6,813,017; 6,809,804; 6,372,506; 5,700,692; 5,643,796; 5,627,040; 5,620,842; 5,602,039; 4,987,086; 4,498,766.

The flow cytometer may be configured as an imaging flow cytometer. For example, in certain instances, the subject systems are flow cytometry systems configured for imaging particles in a flow stream by fluorescence imaging using radiofrequency tagged emission (FIRE), such as those described in Diebold, et al. Nature Photonics Vol. 7(10); 806-810 (2013) as well as described in U.S. Patent Nos. 9,423,353; 9,784,661; 9,983,132; 10,006,852; 10,036,699; 10,078,045; 10,222,316; 10,288,546; 10,324,019; 10,408,758; 10,451,538; 10,620,111; 10,684,211; 10,845,295; 10,935,482; 10,935,485; 11,105,728; 11,280,718; 11,327,016; 11,366,052; 11,371,937; 11,692,926; 11,630,053; 11,774,343; 11,940,369; and 11,946,851.

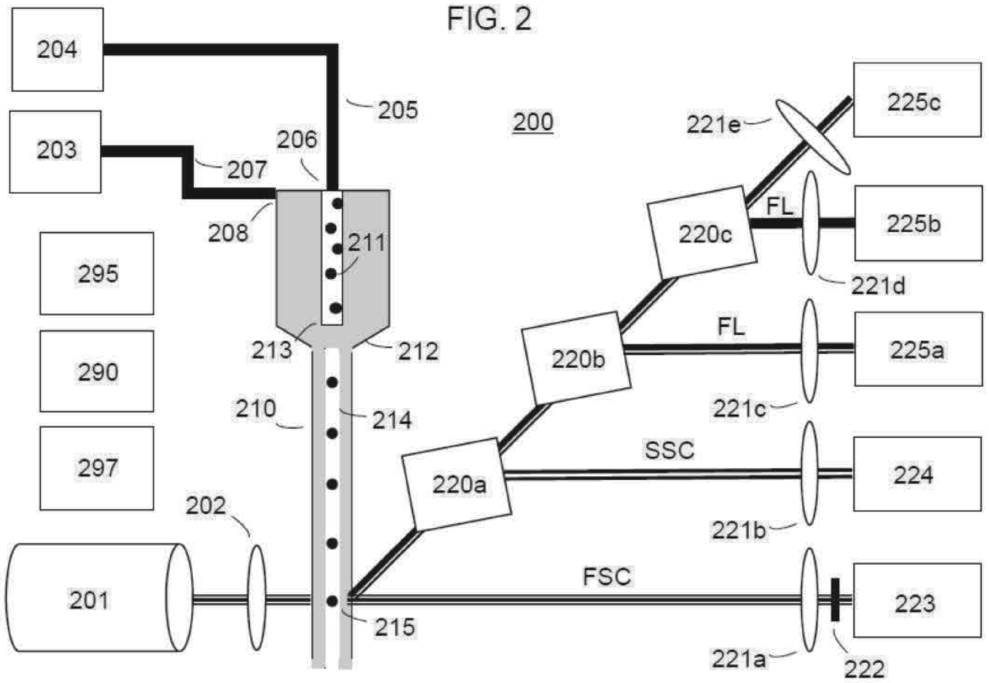

**FIG.** 2 shows a system 200 for flow cytometry in accordance with the present disclosure. System 200 includes a laser 201 configured to irradiate particles 211 in flow stream 214 at interrogation point 215 within flow cell 210. While the example of **FIG. 2** shows a single laser, it is understood that multiple lasers could also be used. The laser beam from laser 201 is directed to focusing lens 202 which focuses the beam onto the portion of a fluid stream where particles 211 of a sample are located, within the flow cell 210. The flow cell 210 is part of a fluidics system which directs particles, typically one at a time, in a stream to the focused laser beam for interrogation. Alternatively, where the flow cytometer is a stream-in-air cytometer, a nozzle top may be employed.

As shown in **FIG. 2****,** flow cell 210 is fluidically connected to sheath fluid reservoir 203 comprising a sheath fluid and sample fluid reservoir 204 comprising a sample fluid. Sheath fluid from sheath fluid reservoir 203 is provided to at least one sheath fluid injection port 208 via conduit (i.e., sheath fluid line) 207. In addition, sample fluid containing particles 211 from sample fluid reservoir 204 is provided to sample injection port 206 via conduit (i.e., sample fluid line) 205. Sample injection port 206 is fluidically connected to sample injector 213 (e.g., sample injection needle) which is configured to introduce particles 211 into the interior of the flow cell 210. Particles 211 are hydrodynamically focused via sheath fluid entering from sheath fluid injection port 208 such that flow stream 214 forms downstream of tapered portion 212 of flow cell 210. Particles emitting at the distal end of flow cell 210 may be disposed of and/or collected via any suitable protocol. For example, depending on the type of flow cytometry being performed, particles may be collected at the distal end of flow cell 210, e.g., via a waste line.

The light from the laser beam(s) interacts with the particles 211 in the sample by diffraction, refraction, reflection, scattering, and absorption with re-emission at various different wavelengths depending on the characteristics of the particle such as its size, internal structure, and the presence of one or more fluorescent molecules attached to or naturally present on or in the particle. The fluorescence emissions as well as the diffracted light, refracted light, reflected light, and scattered light may be routed to one or more detectors. In particular, forward scattered light (FSC) is routed to forward-scattered light detector 223. The forward-scattered light detector 223 is positioned slightly off axis from the direct beam through the flow cell 210 and is configured to detect diffracted light, the excitation light that travels through or around the particle in mostly a forward direction. The intensity of the light detected by the forward-scattered light detector 223 is dependent on the overall size of the particle. The forward-scatter detector can include, e.g., a photodiode. Positioned between forward-scattered light detector 223 are optical filter 221a and scatter bar 222. Optical filter 221a may be configured to filter out at least one wavelength of non-FSC light, while scatter bar 222 may be configured to prevent the incident beam from laser 201 (i.e., non-scattered light) from being detected by forward-scattered light detector 223.

In addition, side-scattered light (SSC) is detected by side-scattered light detector 224. In other words, side-scattered light detector 224 is configured to detect refracted and reflected light from the surfaces and internal structures of the particles 211 that tend to increase with increasing particle complexity of structure. In the example of **FIG. 2****,** flow cytometer 200 includes dichroic mirror 220a configured to reflect SSC light to side-scattered light detector 224 while passing non-SSC (e.g., fluorescent) light. Optical filter 221b is configured to prevent at least one wavelength of non-SSC light from being detected by side-scattered light detector 224. Also shown are fluorescent light detectors 225a-225c which are each configured to detect different wavelengths of fluorescent light. For example, dichroic mirror 220b may be configured to reflect fluorescent light (FL) corresponding to a first wavelength (or range of wavelengths) to fluorescent light detector 225a while passing other wavelengths of light. Optical filter 221c may be configured to prevent at least one wavelength of light that does not correspond to the first wavelength (or range of wavelengths) from being detected by fluorescent light detector 225a. Similarly, dichroic mirror 220c is configured to reflect FL light corresponding to a second wavelength (or range of wavelengths) to fluorescent light detector 225b while passing a third wavelength of light (or range of wavelengths) for detection by fluorescent light detector 225c. Optical filter 221d is configured to prevent at least one wavelength of light that does not correspond to the second wavelength (or range of wavelengths) from being detected by fluorescent light detector 225b. In addition, Optical filter 221e is configured to prevent at least one wavelength of light that does not correspond to the third wavelength (or range of wavelengths) from being detected by fluorescent light detector 225c.

One of skill in the art will recognize that a flow cytometer in accordance with the present disclosure is not limited to the flow cytometer depicted in **FIG. 2****,** but can include any flow cytometer known in the art. For example, a flow cytometer may have any number of lasers, beam splitters, filters, and detectors at various wavelengths and in various different configurations. For example, while **FIG.** 2 shows 3 fluorescent light detectors for illustrative purposes, it is understood that any suitable number of fluorescent light detectors may be employed.

In operation, cytometer operation is controlled by a controller/processor 290, and the measurement data from the detectors can be stored in the memory 295 and processed by the controller/processor 290. Although not shown explicitly, the controller/processor 290 is coupled to the detectors to receive the output signals therefrom, and may also be coupled to electrical and electromechanical components of the flow cytometer to control the laser 201, fluid flow parameters, and the like. Input/output (I/O) capabilities 297 may be provided also in the system. The memory 295, controller/processor 290, and I/O 297 may be entirely provided as an integral part of the flow cytometer. A display may also form part of the I/O capabilities 297 for presenting experimental data to users of the cytometer 200. Alternatively, some or all of the memory 295 and controller/processor 290 and I/O capabilities may be part of one or more external devices such as a general purpose computer. Some or all of the memory 295 and controller/processor 290 can be in wireless or wired communication with the cytometer 210. The controller/processor 290 in conjunction with the memory 295 and the I/O 297 can be configured to perform various functions related to the preparation and analysis of a flow cytometer experiment.

Different fluorescent molecules in a fluorochrome panel used for a flow cytometer experiment will emit light in their own characteristic wavelength bands. The particular fluorescent labels used for an experiment and their associated fluorescent emission bands may be selected to generally coincide with the filter windows of the detectors. The I/O 297 can be configured to receive data regarding a flow cytometer experiment having a panel of fluorescent labels and a plurality of cell populations having a plurality of markers, each cell population having a subset of the plurality of markers. The I/O 297 can also be configured to receive biological data assigning one or more markers to one or more cell populations, marker density data, emission spectrum data, data assigning labels to one or more markers, and cytometer configuration data. Flow cytometer experiment data, such as label spectral characteristics and flow cytometer configuration data can also be stored in the memory 295. The controller/processor 290 can be configured to evaluate one or more assignments of labels to markers.

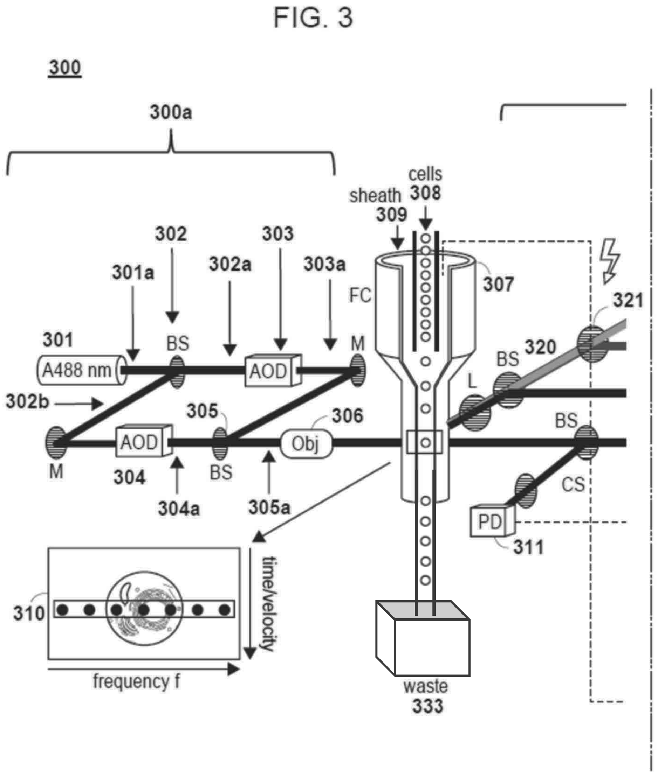

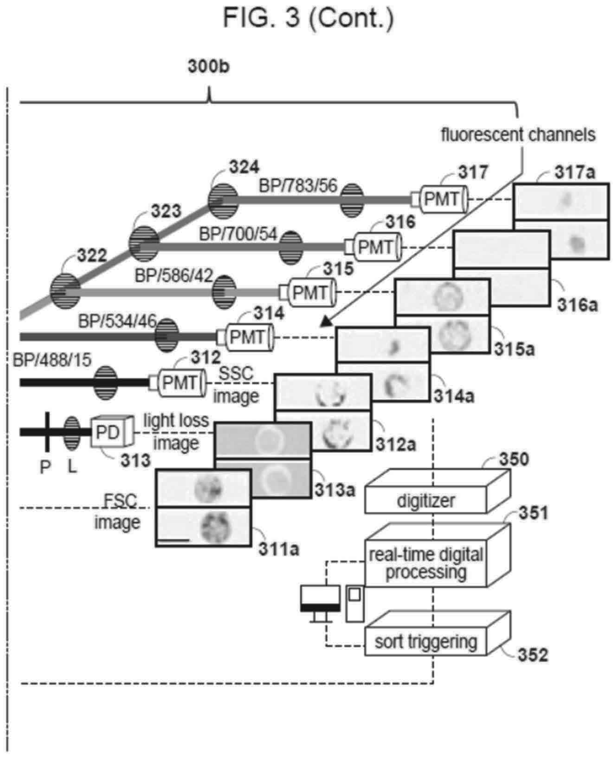

the present disclosure. A system may be a fluorescence imaging system using radiofrequency tagged emission image-enabled particle analysis, such as depicted in **FIG.** 3. Flow cytometer 300 includes a light irradiation component 300a which includes light source 301 (e.g., 488 nm laser) which generates output beam of light 301a that is split with beamsplitter 302 into beams 302a and 302b. Light beam 302a is propagated through acousto-optic device (e.g., an acousto-optic deflector, AOD) 303 to generate an output beam 303a having one or more angularly deflected beams of light. In some instances, output beam 303a generated from acousto-optic device 303 includes a local oscillator beam and a plurality of radiofrequency comb beams. Light beam 302b is propagated through acousto-optic device (e.g., an acousto-optic deflector, AOD) 304 to generate an output beam 304a having one or more angularly deflected beams of light. In some instances, output beam 304a generated from acousto-optic device 304 includes a local oscillator beam and a plurality of radiofrequency comb beams. Output beams 303a and 304a generated from acousto-optic devices 303 and 304, respectively are combined with beamsplitter 305 to generate output beam 305a which is conveyed through an optical component 306 (e.g., an objective lens) to irradiate particles in flow cell 307. In the present disclosure, acousto-optic device 303 (AOD) splits a single laser beam into an array of beamlets, each having different optical frequency and angle. Second AOD 304 tunes the optical frequency of a reference beam, which is then overlapped with the array of beamlets at beam combiner 305. In the present disclosure, the light irradiation system having a light source and acousto-optic device can also include those described in Schraivogel, et al. ("High-speed fluorescence image-enabled cell sorting" Science (2022), 375 (6578): 315-320) and United States Patent Publication No. 2021/0404943.

Output beam 305a irradiates sample particles 308 propagating through flow cell 307 (e.g., with sheath fluid 309) at irradiation region 310. As shown in irradiation region 310, a plurality of beams (e.g., angularly deflected radiofrequency shifted beams of light depicted as dots across irradiation region 310) overlaps with a reference local oscillator beam (depicted as the shaded line across irradiation region 310). Due to their differing optical frequencies, the overlapping beams exhibit a beating behavior, which causes each beamlet to carry a sinusoidal modulation at a distinct frequency f₁₋ₙ.

Light from the irradiated sample is conveyed to light detection system 300b that includes a plurality of photodetectors. Light detection system 300b includes forward scattered light photodetector 311 for generating forward scatter images 311a and a side scattered light photodetector 312 for generating side scatter images 312a. Light detection system 300b also includes brightfield photodetector 313 for generating light loss images 313a. Forward scatter detector 311 and side scatter detector 312 may be photodiodes (e.g., avalanche photodiodes, APDs). In some instances, brightfield photodetector 313 is a photomultiplier tube (PMT). Fluorescence from the irradiated sample is also detected with fluorescence photodetectors 314-317. In some instances, photodetectors 314-317 are photomultiplier tubes. Light from the irradiated sample is directed to the side scatter detection channel 312 and fluorescence detection channels 314-317 through beamsplitter 320. Light detection system 300b includes bandpass optical components 321, 322, 323 and 324 (e.g., dichroic mirrors) for propagating predetermined wavelength of light to photodetectors 314-317. In some instances, optical component 321 is a 534 nm/40 nm bandpass. In some instances, optical component 322 is a 586 nm/42 nm bandpass. In some instances, optical component 323 is a 700 nm/54 nm bandpass. Optical component 324 may be a 783 nm/56 nm bandpass. The first number represents the center of a spectral band. The second number provides a range of the spectral band. Thus, a 510/20 filter extends 10 nm on each side of the center of the spectral band, or from 500 nm to 520 nm.

Data signals generated in response to light detected in scattered light detection channels 311 and 312, brightfield light detection channel 313 and fluorescence detection channels 314-317 are processed by real-time digital processing with processors 350 and 351. Images 311a-317a can be generated in each light detection channel based on the data signals generated in processors 350 and 351.

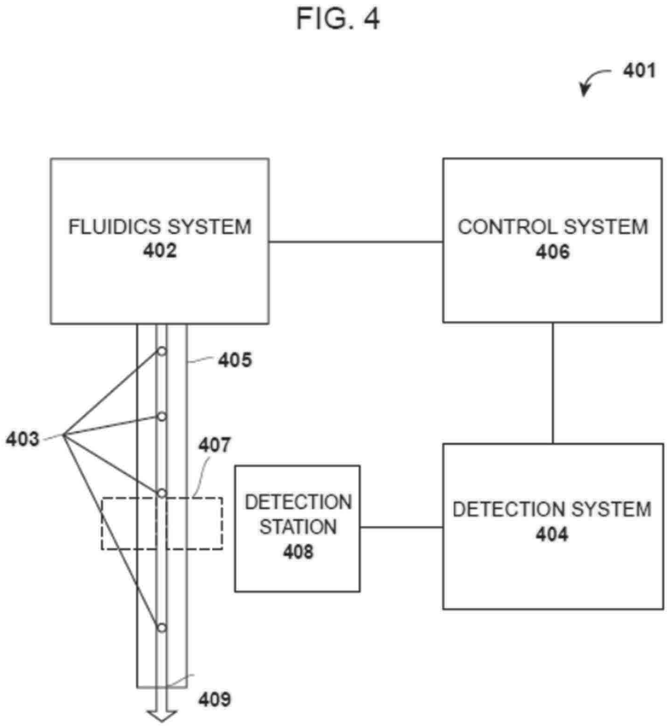

The system may be a particle analyzer where the particle analysis system 401 **(****FIG. 4****)** can be used to analyze and characterize particles. **FIG. 4** shows a functional block diagram of a particle analysis system for computational based sample analysis and particle characterization. The particle analysis system 401 may be a flow system. The particle analysis system 401 includes a fluidics system 402. The fluidics system 402 can include or be coupled with a sample tube 405 and a moving fluid column within the sample tube in which particles 403 (e.g., cells) of a sample move along a common sample path 409.

The particle analysis system 401 includes a detection system 404 configured to collect a signal from each particle as it passes one or more detection stations along the common sample path. A detection station 408 generally refers to a monitored area 407 of the common sample path. Detection can, in some implementations, include detecting light or one or more other properties of the particles 403 as they pass through a monitored area 407. In **FIG. 4****,** one detection station 408 with one monitored area 407 is shown. Some implementations of the particle analysis system 401 can include multiple detection stations. Furthermore, some detection stations can monitor more than one area.

Each signal is assigned a signal value to form a data point for each particle. As described above, this data can be referred to as event data. The data point can be a multidimensional data point including values for respective properties measured for a particle. The detection system 404 is configured to collect a succession of such data points in a first-time interval.

The particle analysis system 401 can also include a control system 406. The control system 406 can include one or more processors, an amplitude control circuit and/or a frequency control circuit. The control system shown can be operationally associated with the fluidics system 402. The control system can be configured to generate a calculated signal frequency for at least a portion of the first-time interval based on a Poisson distribution and the number of data points collected by the detection system 404 during the first time interval. The control system 406 can be further configured to generate an experimental signal frequency based on the number of data points in the portion of the first time interval. The control system 406 can additionally compare the experimental signal frequency with that of a calculated signal frequency or a predetermined signal frequency.

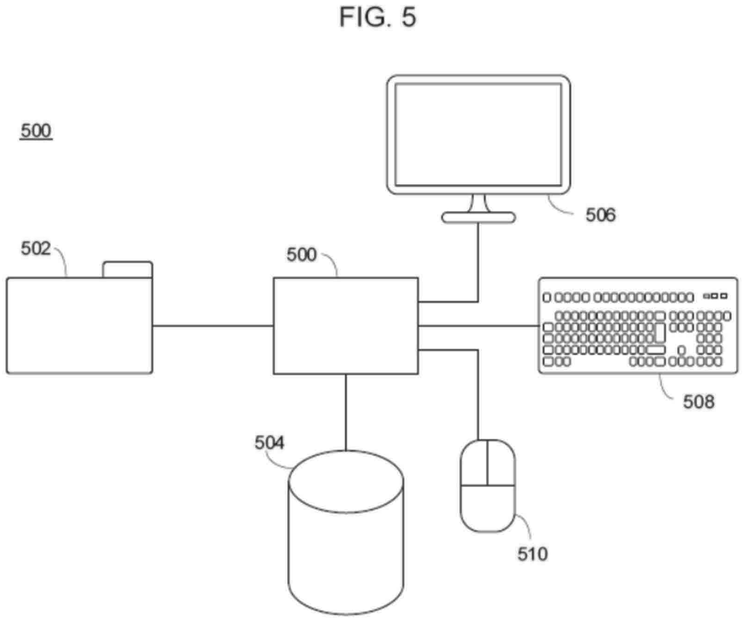

**FIG.** 5 shows a functional block diagram for one example of a particle analyzer control system, such as an analytics controller (i.e., processor) 500, for analyzing and displaying biological events. An analytics controller 500 can be configured to implement a variety of processes for controlling graphic display of biological events.

A particle analyzer 502 can be configured to acquire biological event data. For example, a flow cytometer can generate flow cytometric event data. The particle analyzer 502 can be configured to provide biological event data to the analytics controller 500. A data communication channel can be included between the particle analyzer 502 and the analytics controller 500. The biological event data can be provided to the analytics controller 500 via the data communication channel.

The analytics controller 500 can be configured to receive biological event data from the particle analyzer 502. The biological event data received from the particle analyzer 502 can include flow cytometric event data. The analytics controller 500 can be configured to provide a graphical display including a first plot of biological event data to a display device 506. The analytics controller 500 can be further configured to render a region of interest as a gate around a population of biological event data shown by the display device 506, overlaid upon the first plot, for example. The gate can be a logical combination of one or more graphical regions of interest drawn upon a single parameter histogram or bivariate plot. The display can be used to display particle parameters or saturated detector data.

The analytics controller 500 can be further configured to display the biological event data on the display device 506 within the gate differently from other events in the biological event data outside of the gate. For example, the analytics controller 500 can be configured to render the color of biological event data contained within the gate to be distinct from the color of biological event data outside of the gate. The display device 506 can be implemented as a monitor, a tablet computer, a smartphone, or other electronic device configured to present graphical interfaces.

The analytics controller 500 can be configured to receive a gate selection signal identifying the gate from a first input device. For example, the first input device can be implemented as a mouse 510. The mouse 510 can initiate a gate selection signal to the analytics controller 500 identifying the gate to be displayed on or manipulated via the display device 506 (e.g., by clicking on or in the desired gate when the cursor is positioned there). In some implementations, the first device can be implemented as the keyboard 508 or other means for providing an input signal to the analytics controller 500 such as a touchscreen, a stylus, an optical detector, or a voice recognition system. Some input devices can include multiple inputting functions. In such implementations, the inputting functions can each be considered an input device. For example, as shown **in** **FIG. 5****,** the mouse 510 can include a right mouse button and a left mouse button, each of which can generate a triggering event.

The triggering event can cause the analytics controller 500 to alter the manner in which the data is displayed, which portions of the data is actually displayed on the display device 506.

The analytics controller 500 can be configured to detect when gate selection is initiated by the mouse 510. The analytics controller 500 can be further configured to automatically modify plot visualization to facilitate the gating process. The modification can be based on the specific distribution of biological event data received by the analytics controller 500.

The analytics controller 500 can be connected to a storage device 504. The storage device 504 can be configured to receive and store biological event data from the analytics controller 500. The storage device 504 can also be configured to receive and store flow cytometric event data from the analytics controller 500. The storage device 504 can be further configured to allow retrieval of biological event data, such as flow cytometric event data, by the analytics controller 500.

A display device 506 can be configured to receive display data from the analytics controller 500. The display data can comprise plots of biological event data and gates outlining sections of the plots. The display device 506 can be further configured to alter the information presented according to input received from the analytics controller 500 in conjunction with input from the particle analyzer 502, the storage device 504, the keyboard 508, and/or the mouse 510.

### METHODS

The disclosure also concerns a method of analyzing a sample. A sample may be analyzed using an analyzing flow cytometer as described herein. Once a sample is analyzed, sheath fluid may be bidirectionally transmitted through the sample line to reduce sample carryover. Bidirectionally transmitting sheath fluid comprises directing the controller to bidirectionally transmit sheath fluid through the sample line. Bidirectionally transmitting sheath fluid through the sample line may comprise transmitting sheath fluid antegrade and transmitting sheath fluid retrograde through the sample line. As noted above, transmitting sheath fluid antegrade through the sample line directs fluid toward a waste container, while transmitting sheath fluid retrograde through the sample line directs fluid away from the waste container. As described above, bidirectionally transmitting sheath fluid can include applying positive and negative pressures to provide a scrubbing effect to a sample line. As described above, the application of positive and negative pressures can alternate between positive and negative pressure (in any order) for one or more applications each (e.g., at least one application of positive pressure and at least one application of negative pressure). In some instances, the positive and negative pressure are each applied two times, three times, four times, five times, six times, seven times, eight times, nine times, or ten times. In some instances, the positive and negative pressures are applied the same number of times (e.g., twice each), while in other instances, one of the positive or the negative pressure is applied more times-e.g., positive pressure is applied three times, while negative pressure is applied twice. The washing of the sample line may include neutralizing the pressure within the sample line, such that flow is stopped. Once the sample line is washed, a second sample may be introduced and analyzed as described above.

The sample analyzed in the instant method may be a biological sample. The term "biological sample" is used in its conventional sense to refer to a whole organism, plant, fungi or a subset of animal tissues, cells or component parts which may in certain instances be found in blood, mucus, lymphatic fluid, synovial fluid, cerebrospinal fluid, saliva, bronchoalveolar lavage, amniotic fluid, amniotic cord blood, urine, vaginal fluid and semen. As such, a "biological sample" refers to both the native organism or a subset of its tissues as well as to a homogenate, lysate or extract prepared from the organism or a subset of its tissues, including but not limited to, for example, plasma, serum, spinal fluid, lymph fluid, sections of the skin, respiratory, gastrointestinal, cardiovascular, and genitourinary tracts, tears, saliva, milk, blood cells, tumors, organs. Biological samples may be any type of organismic tissue, including both healthy and diseased tissue (e.g., cancerous, malignant, necrotic, etc.). In the present disclosure, the biological sample is a liquid sample, such as blood or derivative thereof, e.g., plasma, tears, urine, semen, etc., where in some instances the sample is a blood sample, including whole blood, such as blood obtained from venipuncture or fingerstick (where the blood may or may not be combined with any reagents prior to assay, such as preservatives, anticoagulants, etc.).

The source of the sample may be a "mammal" or "mammalian", where these terms are used broadly to describe organisms which are within the class Mammalia, including the orders carnivore (e.g., dogs and cats), Rodentia (e.g., mice, guinea pigs, and rats), and primates (e.g., humans, chimpanzees, and monkeys). In some instances, the subjects are humans. The method may be applied to samples obtained from human subjects of both genders and at any stage of development (i.e., neonates, infant, juvenile, adolescent, adult), where in the present disclosure the human subject is a juvenile, adolescent or adult. While the present disclosure may be applied to samples from a human subject, it is to be understood that the methods may also be carried-out on samples from other animal subjects (that is, in "non-human subjects") such as, but not limited to, birds, mice, rats, dogs, cats, livestock and horses.

Cells of interest may be targeted for characterized according to a variety of parameters, such as a phenotypic characteristic identified via the attachment of a particular fluorescent label to cells of interest. The system may be configured to deflect analyzed droplets that are determined to include a target cell. A variety of cells may be characterized using the subject methods. Target cells of interest include, but are not limited to, stem cells, T cells, dendritic cells, B Cells, granulocytes, leukemia cells, lymphoma cells, virus cells (e.g., HIV cells), NK cells, macrophages, monocytes, fibroblasts, epithelial cells, endothelial cells, and erythroid cells. Target cells of interest include cells that have a convenient cell surface marker or antigen that may be captured or labelled by a convenient affinity agent or conjugate thereof. For example, the target cell may include a cell surface antigen such as CD11b, CD123, CD14, CD15, CD16, CD19, CD193, CD2, CD25, CD27, CD3, CD335, CD36, CD4, CD43, CD45RO, CD56, CD61, CD7, CD8, CD34, CD1c, CD23, CD304, CD235a, T cell receptor alpha/beta, T cell receptor gamma/delta, CD253, CD95, CD20, CD105, CD117, CD120b, Notch4, Lgr5 (N-Terminal), SSEA-3, TRA-1-60 Antigen, Disialoganglioside GD2 and CD71. The target cell may be selected from HIV containing cell, a Treg cell, an antigen-specific T - cell populations, tumor cells or hematopoietic progenitor cells (CD34+) from whole blood, bone marrow or cord blood.

In practicing the subject method, an amount of an initial fluidic sample may be injected into the flow cytometer.

The method according to the present disclosure may include counting labeled particles (e.g., target cells) in a sample. In practicing the subject methods, the fluidic sample including the particles is first introduced into a flow nozzle of the system. Upon exit from the flow nozzle, the particles are passed substantially one at a time through the sample interrogation region where each of the particles is irradiated to a source of light and measurements of light scatter parameters and, in some instances, fluorescent emissions as desired (e.g., two or more light scatter parameters and measurements of one or more fluorescent emissions) are separately recorded for each particle. Depending on the properties of the flow stream being interrogated, 0.001 mm or more of the flow stream may be irradiated with light, such as 0.005 mm or more, such as 0.01 mm or more, such as 0.05 mm or more, such as 0.1 mm or more, such as 0.5 mm or more and including 1 mm or more of the flow stream may be irradiated with light. In the present disclosure, methods include irradiating a planar cross-section of the flow stream in the sample interrogation region, such as with a laser (as described above). The method may include irradiating a predetermined length of the flow stream in the sample interrogation region, such as corresponding to the irradiation profile of a diffuse laser beam or lamp.

The method may include irradiating the flow stream at or near the flow cell nozzle orifice. For example, methods may include irradiating the flow stream at a position about 0.001 mm or more from the nozzle orifice, such as 0.005 mm or more, such as 0.01 mm or more, such as 0.05 mm or more, such as 0.1 mm or more, such as 0.5 mm or more and including 1 mm or more from the nozzle orifice. In the present disclosure, methods include irradiating the flow stream immediately adjacent to the flow cell nozzle orifice.

Detectors, such as photomultiplier tubes (PMT), may be used to record light that passes through each particle (in certain cases referred to as forward light scatter), light that is reflected orthogonal to the direction of the flow of the particles through the sensing region (in some cases referred to as orthogonal or side light scatter) and fluorescent light emitted from the particles, if it is labeled with fluorescent marker(s), as the particle passes through the sensing region and is illuminated by the energy source. Each of forward light scatter (FSC), side-scatter (SSC), and fluorescence emissions include a separate parameter for each particle (or each "event"). Thus, for example, two, three or four parameters can be collected (and recorded) from a particle labeled with two different fluorescence markers. The data recorded for each particle is analyzed in real time or stored in a data storage and analysis means, such as a computer, as desired.

the present disclosure. The particles may be detected and uniquely identified by exposing the particles to excitation light and measuring the fluorescence of each particle in one or more detection channels, as desired. Fluorescence emitted in detection channels used to identify the particles and binding complexes associated therewith may be measured following excitation with a single light source, or may be measured separately following excitation with distinct light sources. If separate excitation light sources are used to excite the particle labels, the labels may be selected such that all the labels are excitable by each of the excitation light sources used.

The method of the present disclosure may also include data acquisition, analysis and recording, such as with a computer, wherein multiple data channels record data from each detector for the light scatter and fluorescence emitted by each particle as it passes through the sample interrogation region. Analysis may include classifying and counting particles such that each particle is present as a set of digitized parameter values. The subject systems may be set to trigger on a selected parameter in order to distinguish the particles of interest from background and noise. "Trigger" refers to a preset threshold for detection of a parameter and may be used as a means for detecting passage of a particle through the light source. Detection of an event that exceeds the threshold for the selected parameter triggers acquisition of light scatter and fluorescence data for the particle. Data is not acquired for particles or other components in the medium being assayed which cause a response below the threshold. The trigger parameter may be the detection of forward-scattered light caused by passage of a particle through the light beam. The flow cytometer then detects and collects the light scatter and fluorescence data for the particle.

A particular subpopulation of interest is then further analyzed by "gating" based on the data collected for the entire population. To select an appropriate gate, the data is plotted so as to obtain the best separation of subpopulations possible. This procedure may be performed by plotting forward light scatter (FSC) vs. side (i.e., orthogonal) light scatter (SSC) on a two dimensional dot plot. A subpopulation of particles is then selected (i.e., those cells within the gate) and particles that are not within the gate are excluded. Where desired, the gate may be selected by drawing a line around the desired subpopulation using a cursor on a computer screen. Only those particles within the gate are then further analyzed by plotting the other parameters for these particles, such as fluorescence. Where desired, the above analysis may be configured to yield counts of the particles of interest in the sample.

### COMPUTER-CONTROLLED SYSTEMS

The system may include a display and operator input device. Operator input devices may, for example, be a keyboard, mouse, or the like. The processing module includes a processor which has access to a memory having instructions stored thereon for performing the steps of the subject methods. The processing module may include an operating system, a graphical user interface (GUI) controller, a system memory, memory storage devices, and input-output controllers, cache memory, a data backup unit, and many other devices. The processor may be a commercially available processor, or it may be one of other processors that are or will become available. The processor executes the operating system and the operating system interfaces with firmware and hardware in a well-known manner, and facilitates the processor in coordinating and executing the functions of various computer programs that may be written in a variety of programming languages, such as Java, Perl, C++, Python, other high level or low level languages, as well as combinations thereof, as is known in the art. The operating system, typically in cooperation with the processor, coordinates and executes functions of the other components of the computer. The operating system also provides scheduling, input-output control, file and data management, memory management, and communication control and related services, all in accordance with known techniques. The processor may include analog electronics which provide feedback control, such as for example negative feedback control.

The system memory may be any of a variety of known or future memory storage devices. Examples include any commonly available random access memory (RAM), magnetic medium such as a resident hard disk or tape, an optical medium such as a read and write compact disc, flash memory devices, or other memory storage device. The memory storage device may be any of a variety of known or future devices, including a compact disk drive, a tape drive, or a diskette drive. Such types of memory storage devices typically read from, and/or write to, a program storage medium (not shown) such as a compact disk. Any of these program storage media, or others now in use or that may later be developed, may be considered a computer program product. As will be appreciated, these program storage media typically store a computer software program and/or data. Computer software programs, also called computer control logic, typically are stored in system memory and/or the program storage device used in conjunction with the memory storage device.

A computer program product is described preferably comprising a computer usable medium having control logic (computer software program, including program code) stored therein. The control logic, when executed by the processor the computer, causes the processor to perform functions described herein. Some functions may be implemented primarily in hardware using, for example, a hardware state machine. Implementation of the hardware state machine so as to perform the functions described herein will be apparent to those skilled in the relevant arts.

Memory may be any suitable device in which the processor can store and retrieve data, such as magnetic, optical, or solid-state storage devices (including magnetic or optical disks or tape or RAM, or any other suitable device, either fixed or portable). The processor may include a general-purpose digital microprocessor suitably programmed from a computer readable medium carrying necessary program code. Programming can be provided remotely to processor through a communication channel, or previously saved in a computer program product such as memory or some other portable or fixed computer readable storage medium using any of those devices in connection with memory. For example, a magnetic or optical disk may carry the programming, and can be read by a disk writer/reader. Systems of the disclosure also include programming, e.g., in the form of computer program products, algorithms for use in practicing the methods as described above. Programming according to the present disclosure can be recorded on computer readable media, e.g., any medium that can be read and accessed directly by a computer. Such media include, but are not limited to: magnetic storage media, such as floppy discs, hard disc storage medium, and magnetic tape; optical storage media such as CD-ROM; electrical storage media such as RAM and ROM; portable flash drive; and hybrids of these categories such as magnetic/optical storage media.

The processor may also have access to a communication channel to communicate with a user at a remote location. By remote location is meant the user is not directly in contact with the system and relays input information to an input manager from an external device, such as a computer connected to a Wide Area Network ("WAN"), telephone network, satellite network, or any other suitable communication channel, including a mobile telephone (i.e., smartphone).

A system according to the present disclosure may be configured to include a communication interface. The communication interface may include a receiver and/or transmitter for communicating with a network and/or another device. The communication interface can be configured for wired or wireless communication, including, but not limited to, radio frequency (RF) communication (e.g., RadioFrequency Identification (RFID), Zigbee communication protocols, Wi-Fi, infrared, wireless Universal Serial Bus (USB), Ultra Wide Band (UWB), Bluetooth^{®} communication protocols, and cellular communication, such as code division multiple access (CDMA) or Global System for Mobile communications (GSM).

The communication interface may be configured to include one or more communication ports, e.g., physical ports or interfaces such as a USB port, a USB-C port, an RS-232 port, or any other suitable electrical connection port to allow data communication between the subject systems and other external devices such as a computer terminal (for example, at a physician's office or in hospital environment) that is configured for similar complementary data communication.

The communication interface may be configured for infrared communication, Bluetooth^{®} communication, or any other suitable wireless communication protocol to enable the subject systems to communicate with other devices such as computer terminals and/or networks, communication enabled mobile telephones, personal digital assistants, or any other communication devices which the user may use in conjunction.

The communication interface may be configured to provide a connection for data transfer utilizing Internet Protocol (IP) through a cell phone network, Short Message Service (SMS), wireless connection to a personal computer (PC) on a Local Area Network (LAN) which is connected to the internet, or Wi-Fi connection to the internet at a Wi-Fi hotspot.

The subject system may be configured to wirelessly communicate with a server device via the communication interface, e.g., using a common standard such as 802.11 or Bluetooth^{®} RF protocol, or an IrDA infrared protocol. The server device may be another portable device, such as a smart phone, Personal Digital Assistant (PDA) or notebook computer; or a larger device such as a desktop computer, appliance, etc. The server device may have a display, such as a liquid crystal display (LCD), as well as an input device, such as buttons, a keyboard, mouse or touch-screen.

The communication interface may be configured to automatically or semiautomatically communicate data stored in the subject systems, e.g., in an optional data storage unit, with a network or server device using one or more of the communication protocols and/or mechanisms described above.

Output controllers may include controllers for any of a variety of known display devices for presenting information to a user, whether a human or a machine, whether local or remote. If one of the display devices provides visual information, this information typically may be logically and/or physically organized as an array of picture elements. A graphical user interface (GUI) controller may include any of a variety of known or future software programs for providing graphical input and output interfaces between the system and a user, and for processing user inputs. The functional elements of the computer may communicate with each other via system bus. Some of these communications may be accomplished using network or other types of remote communications. The output manager may also provide information generated by the processing module to a user at a remote location, e.g., over the Internet, phone or satellite network, in accordance with known techniques. The presentation of data by the output manager may be implemented in accordance with a variety of known techniques. As some examples, data may include SQL, HTML or XML documents, email or other files, or data in other forms. The data may include Internet URL addresses so that a user may retrieve additional SQL, HTML, XML, or other documents or data from remote sources. The one or more platforms present in the subject systems may be any type of known computer platform or a type to be developed in the future, although they typically will be of a class of computer commonly referred to as servers. However, they may also be a main-frame computer, a workstation, or other computer type. They may be connected via any known or future type of cabling or other communication system including wireless systems, either networked or otherwise. They may be co-located or they may be physically separated. Various operating systems may be employed on any of the computer platforms, possibly depending on the type and/or make of computer platform chosen. Appropriate operating systems include Windows^{®} NT^{®}, Windows^{®} XP, Windows^{®} 7, Windows^{®} 8, Windows^{®} 10, iOS^{®}, macOS^{®}, Linux^{®}, Ubuntu^{®}, Fedora^{®}, OS/400^{®}, i5/OS^{®}, IBM i^{®}, Android^{™}, SGI IRIX^{®}, Oracle Solaris^{®} and others.

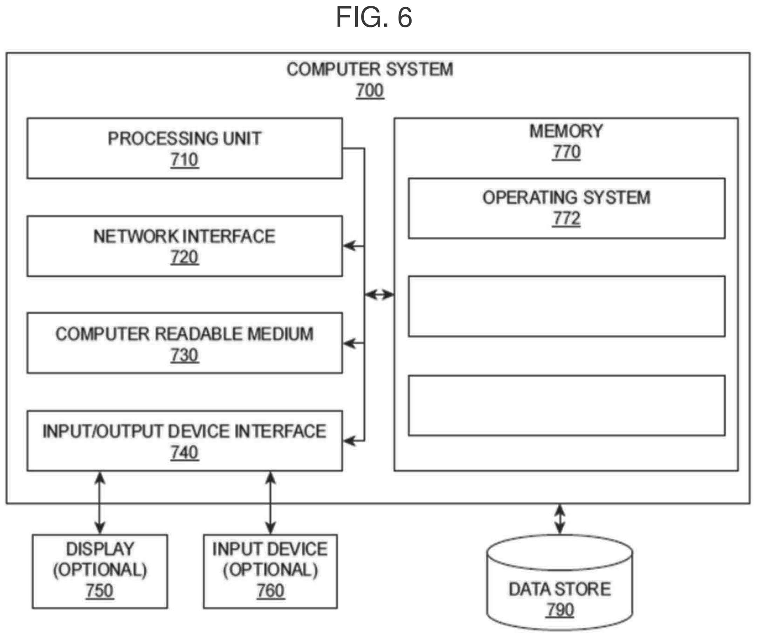

**FIG. 6** depicts a general architecture of an example computing device 700 according to the present disclosure. The general architecture of the computing device 700 depicted in **FIG. 6** includes an arrangement of computer hardware and software components. It is not necessary, however, that all of these generally conventional elements be shown in order to provide an enabling disclosure. As illustrated, the computing device 700 includes a processing unit 710, a network interface 720, a computer readable medium drive 730, an input/output device interface 740, a display 750, and an input device 760, all of which may communicate with one another by way of a communication bus. The network interface 720 may provide connectivity to one or more networks or computing systems. The processing unit 710 may thus receive information and instructions from other computing systems or services via a network. The processing unit 710 may also communicate to and from memory 770 and further provide output information for an optional display 750 via the input/output device interface 740. For example, an analysis software (e.g., data analysis software or program such as FlowJo^{®}) stored as executable instructions in the non-transitory memory of the analysis system can display the flow cytometry event data to a user. The input/output device interface 740 may also accept input from the optional input device 760, such as a keyboard, mouse, digital pen, microphone, touch screen, gesture recognition system, voice recognition system, gamepad, accelerometer, gyroscope, or other input device.

The memory 770 may contain computer program instructions (which may be grouped as modules or components) that the processing unit 710 executes.. The memory 770 generally includes RAM, ROM and/or other persistent, auxiliary or non-transitory computer-readable media. The memory 770 may store an operating system 772 that provides computer program instructions for use by the processing unit 710 in the general administration and operation of the computing device 700. Data may be stored in data storage device 790. The memory 770 may further include computer program instructions and other information for implementing aspects of the present disclosure.

### UTILITY

The disclosure may find use in applications where cells from a biological sample may be analyzed for research or laboratory testing, including diagnostics. The subject method and device may facilitate analyzing individual cells prepared from a target fluidic or tissue biological sample. For example, the subject method and system facilitate analyzing cells from fluidic or tissue samples to be used as a research or diagnostic specimen for diseases such as cancer.

Notwithstanding the appended claims, the disclosure is also defined by the following clauses:
1. An analyzing flow cytometer comprising:
   a flow cell comprising:
      a sample line inlet;
      a sheath fluid injection port; and
      a waste fluid outlet;
   a sample line coupled to the sample line inlet and configured to receive a sample from a sample container;
   a sheath line coupled to the sheath fluid injection port and configured to transmit sheath fluid from a sheath fluid container to the sheath fluid injection port;
   a first pump fluidically coupled to the waste fluid outlet;
   a second pump fluidically coupled to the sheath line; and
   a controller configured to direct the first pump, the second pump, or both to bidirectionally transmit sheath fluid through the sample line.
2. The analyzing flow cytometer according to Clause 1, wherein the controller is configured to alternate pressure from the first pump and the second pump to bidirectionally transmit sheath fluid through the sample line.
3. The analyzing flow cytometer according to Clause 1 or 2, further comprising a valve fluidically coupled to the first pump or the second pump, wherein the controller is further configured to direct the valve to alternate pressure from the first pump and the second pump to bidirectionally transmit sheath fluid through the sample line.
4. The analyzing flow cytometer according to any one of Clauses 1-3, wherein the controller directs the first pump, the second pump, or both to apply positive and negative pressure to bidirectionally transmit sheath fluid through the sample line.
5. The analyzing flow cytometer according to any one of Clauses 1-4, wherein the controller directs the second pump to apply a positive pressure to the sheath line.
6. The analyzing flow cytometer according to Clause 4 or 5, wherein the controller directs the second pump to transmit sheath fluid from the sheath fluid container into the flow cell via the sheath line.
7. The analyzing flow cytometer according to Clause 6, wherein transmitting sheath fluid from the sheath fluid container into the flow cell via the sheath line also transmits sheath fluid into the sample line.
8. The analyzing flow cytometer according to any one of Clauses 4-7, wherein the controller directs the first pump to apply a negative pressure to the flow cell via the waste fluid outlet.
9. The analyzing flow cytometer according to any one of Clauses 4-8, wherein the first pump is a vacuum pump.
10. The analyzing flow cytometer according to any one of Clauses 4-9, wherein the positive and negative pressures are applied as follows:
   a. applying positive pressure of 1 to 5 psi for 500 to 2500 milliseconds (ms)
   b. applying negative pressure of 1 to 5 psi for 250 to 1000 ms
   c. applying positive pressure of 1 to 5 psi for 500 to 2500 ms
   d. applying negative pressure of 1 to 5 psi for 250 to 1000 ms.
11. The analyzing flow cytometer according to Clause 10, further comprising:
   e. applying positive pressure of 1 to 5 psi for 250 to 1000 ms.
12. The analyzing flow cytometer according to any one of Clauses 4-9, wherein the positive and negative pressures applied as follows:
   a. applying positive pressure of 2 to 4.5 psi for 1000 milliseconds (ms)
   b. applying negative pressure of 2 to 4.5 psi for 500 ms
   c. applying positive pressure of 2 to 4.5 psi for 1000 ms
   d. applying negative pressure of 2 to 4.5 psi for 500 ms.
13. The analyzing flow cytometer according to Clause 12, further comprising:
   e. applying positive pressure of 2 to 4.5 psi for 500 ms.
14. The analyzing flow cytometer according to any one of Clauses 10-13, wherein the controller is further configured to direct the first pump, the second pump, or both to neutralize pressure in the sample line.
15. The analyzing flow cytometer according to any of the preceding Clauses, wherein the analyzing flow cytometer exhibits a sample carryover of 0.1% or less.
16. The analyzing flow cytometer according to any of the preceding Clauses, wherein the analyzing flow cytometer exhibits a sample carryover of 0.05% or less.
17. The analyzing flow cytometer according to any one of Clauses 1-16, further comprising a flow meter configured to determine flow of fluid through the sample line.
18. The analyzing flow cytometer according to Clause 17, wherein the flow meter is located on the sample line between the first open end and the second outlet end.
19. The analyzing flow cytometer according to any of the preceding Clauses, further comprising:
   a sample container receiving region configured to hold the sample container;
   a sample injection tube (SIT) assembly comprising:
      (a) the sample line, wherein the sample line comprises:
         (ii) a first open end configured to receive sample from the sample container present in the sample container receiving region; and
         (ii) a second outlet end configured to fluidically couple to the sample inlet port of the flow cell; and
      (b) an outer sleave through which the sample line may pass; and
   a waste line fluidically coupled to the waste fluid outlet of the flow cell.
20. The analyzing flow cytometer according to Clause 19, wherein the outer sleave comprises a fluid outlet fluidically coupled with an aspiration pump.
21. The analyzing flow cytometer according to Clause 20, wherein the controller is further configured to direct the aspiration pump to aspirate fluid emitted from the first open end of the sample line.
22. The analyzing flow cytometer according to Clause 21, wherein aspirating the fluid emitted from the first open end comprises directing the aspiration pump such that the emitted fluid enters the fluid outlet on the outer sleave.
23. The analyzing flow cytometer according to any one of Clauses 20-22, further comprising a valve fluidically coupled to the fluid outlet on the outer sleave and the aspiration pump, and wherein the controller is further configured to direct the opening and closing of the valve to allow the aspiration pump to aspirate fluid emitted from the first open end of the sample line.
24. The analyzing flow cytometer according to any one of Clauses 1-23, further comprising a light source configured to irradiate the flow cell at an interrogation point.
25. The analyzing flow cytometer according to any one of Clauses 1-24, further comprising a detector configured to collect particle-modulated light from the flow cell.
26. The analyzing flow cytometer according to any one of Clauses 1-25, wherein the analyzing flow cytometer is an imaging flow cytometer.
27. A method of analyzing a sample, the method comprising:
   introducing a particulate sample from a sample container into an analyzing flow cytometer comprising:
   a flow cell comprising:
      a sample line inlet;
      a sheath fluid injection port; and
      a waste fluid outlet;
   a sample line coupled to the sample line inlet and configured to receive a sample from a sample container;
   a sheath line coupled to the sheath fluid injection port and configured to transmit sheath fluid from a sheath fluid container to the sheath fluid injection port;
   a first pump fluidically coupled to the waste fluid outlet;
   a second pump fluidically coupled to the sheath line; and
   a controller configured to direct the first pump, the second pump, or both to bidirectionally transmit sheath fluid through the sample line; and
   flow cytometrically analyzing the particulate sample.
28. The method according to Clause 26, wherein the controller is configured to alternate pressure from the first pump and the second pump to bidirectionally transmit sheath fluid through the sample line.
29. The method according to Clause 28, further comprising:
   bidirectionally transmitting sheath fluid through the sample line.
30. The method according to Clause 29, wherein bidirectionally transmitting sheath fluid through the sample line comprises directing the controller to bidirectionally transmit sheath fluid through the sample line.
31. The method according to Clause 29 or 30, wherein bidirectionally transmitting sheath fluid through the sample line comprises transmitting sheath fluid antegrade and transmitting sheath fluid retrograde through the sample line.
32. The method according to Clause 31, wherein transmitting sheath fluid antegrade through the sample line directs fluid toward a waste container.
33. The method according to Clause 31 or 32, wherein transmitting sheath fluid retrograde through the sample line directs fluid away from the waste container.
34. The method according to any one of Clauses 29-33, further comprising:
   introducing a second particulate sample from a second sample container into the flow cytometer comprising; and
   flow cytometrically analyzing the second sample.
35. The method according to any one of Clauses 27-34, further comprising a valve fluidically coupled to the first pump or the second pump, wherein the controller is further configured to direct the valve to alternate pressure from the first pump and the second pump to bidirectionally transmit sheath fluid through the sample line.
36. The method according to any one of Clauses 27-35, wherein the controller directs the first pump, the second pump, or both to apply positive and negative pressure to bidirectionally transmit sheath fluid through the sample line.
37. The method according to any one of Clauses 27-36, wherein the controller directs the second pump to apply a positive pressure to the sheath line.
38. The method according to Clause 36 or 37, wherein the controller directs the second pump to transmit sheath fluid from the sheath fluid container into the flow cell via the sheath line.
39. The method according to Clause 38, wherein transmitting sheath fluid from the sheath fluid container into the flow cell via the sheath line also transmits sheath fluid into the sample line.
40. The method according to any one of Clauses 36-39, wherein the controller directs the first pump to apply a negative pressure to the flow cell via the waste fluid outlet.
41. The method according to any one of Clauses 36-40, wherein the first pump is a vacuum pump.
42. The method according to any one of Clauses 36-41, wherein the positive and negative pressures are applied as follows:
   a. applying positive pressure of 1 to 5 psi for 500 to 2500 milliseconds (ms)
   b. applying negative pressure of 1 to 5 psi for 250 to 1000 ms
   c. applying positive pressure of 1 to 5 psi for 500 to 2500 ms
   d. applying negative pressure of 1 to 5 psi for 250 to 1000 ms.
43. The method according to Clause 42, further comprising:
   e. applying positive pressure of 1 to 5 psi for 250 to 1000 ms.
44. The method according to any one of Clauses 36-41, wherein the positive and negative pressures applied as follows:
   a. applying positive pressure of 2 to 4.5 psi for 1000 milliseconds (ms)
   b. applying negative pressure of 2 to 4.5 psi for 500 ms
   c. applying positive pressure of 2 to 4.5 psi for 1000 ms
   d. applying negative pressure of 2 to 4.5 psi for 500 ms.
45. The method according to Clause 44, further comprising:
   e. applying positive pressure of 2 to 4.5 psi for 500 ms.
46. The method according to any one of Clauses 42-45, wherein the controller is further configured to direct the first pump, the second pump, or both to neutralize pressure in the sample line.
47. The method according to any of Clauses 27-46, wherein the flow cytometer exhibits a sample carryover of 0.1% or less.
48. The method according to any of Clauses 27-47, wherein the flow cytometer exhibits a sample carryover of 0.05% or less.
49. The method according to any one of Clauses 27-48, further comprising a flow meter configured to determine flow of fluid through the sample line.
50. The method according to Clause 49, wherein the flow meter is located on the sample line between the first open end and the second outlet end.
51. The method according to any one of Clauses 27-50, further comprising:
   a sample container receiving region configured to hold the sample container;
   a sample injection tube (SIT) assembly comprising:
      (a) the sample line, wherein the sample line comprises:
         (ii) a first open end configured to receive sample from the sample container present in the sample container receiving region; and
         (ii) a second outlet end configured to fluidically couple to the sample inlet port of the flow cell; and
      (b) an outer sleave through which the sample line may pass;
   a waste line fluidically coupled to the waste fluid outlet of the flow cell.
52. The method according to Clause 51, wherein the outer sleave comprises a fluid outlet in fluid communication with an aspiration pump.
53. The method according to Clause 52, wherein the controller is further configured to aspirate fluid emitted from the first open end of the sample line.
54. The method according to Clause 53, wherein aspirating the fluid emitted from the first open end comprises directing the aspiration pump such that the emitted fluid enters the fluid outlet on the outer sleave.
55. The method according to any one of Clauses 52-54, further comprising a valve fluidically coupled to the outlet on the outer sleave and the aspiration pump, and wherein the controller is further configured to direct the opening and closing of the valve to allow the aspiration pump to aspirate fluid emitted from the first open end of the sample line.
56. The method according to any one of Clauses 27-55, further comprising a light source configured to irradiate the flow cell at an interrogation point.
57. The method according to any one of Clauses 27-56, further comprising a detector configured to collect particle-modulated light from the flow cell.
58. The method according to any one of Clauses 27-57, wherein the flow cytometer is an imaging flow cytometer.

Although the foregoing disclosure has been described in some detail by way of illustration and example for purposes of clarity of understanding, it is readily apparent to those of ordinary skill in the art in light of the teachings of this disclosure that some changes and modifications may be made thereto without departing from the scope of the appended claims.

Accordingly, the preceding merely illustrates the principles of the disclosure. It will be appreciated that those skilled in the art will be able to devise various arrangements which, although not explicitly described or shown herein, embody the principles of the disclosure and are included within scope. Furthermore, all examples and conditional language recited herein are principally intended to aid the reader in understanding the principles of the disclosure and the concepts contributed by the inventors to furthering the art, and are to be construed as being without limitation to such specifically recited examples and conditions

## Claims

1. An analyzing flow cytometer comprising:
a flow cell comprising:
a sample line inlet;
a sheath fluid injection port; and
a waste fluid outlet;
a sample line coupled to the sample line inlet and configured to receive a sample from a sample container;
a sheath line coupled to the sheath fluid injection port and configured to transmit sheath fluid from a sheath fluid container to the sheath fluid injection port;
a first pump fluidically coupled to the waste fluid outlet;
a second pump fluidically coupled to the sheath line; and
a controller configured to direct the first pump, the second pump, or both to bidirectionally transmit sheath fluid through the sample line.

2. The analyzing flow cytometer according to Claim 1, wherein the controller is configured to alternate pressure from the first pump and the second pump to bidirectionally transmit sheath fluid through the sample line.

3. The analyzing flow cytometer according to Claim 1 or 2, further comprising a valve fluidically coupled to the first pump or the second pump, wherein the controller is further configured to direct the valve to alternate pressure from the first pump and the second pump to bidirectionally transmit sheath fluid through the sample line.

4. The analyzing flow cytometer according to any one of Claims 1-3, wherein the controller directs the first pump, the second pump, or both to apply positive and negative pressure to bidirectionally transmit sheath fluid through the sample line.

5. The analyzing flow cytometer according to any one of Claims 1-4, wherein the controller directs the second pump to apply a positive pressure to the sheath line.

6. The analyzing flow cytometer according to Claim 4 or 5, wherein the controller directs the second pump to transmit sheath fluid from the sheath fluid container into the flow cell via the sheath line.

7. The analyzing flow cytometer according to Claim 6, wherein transmitting sheath fluid from the sheath fluid container into the flow cell via the sheath line also transmits sheath fluid into the sample line.

8. The analyzing flow cytometer according to any one of Claims 4-7, wherein the controller directs the first pump to apply a negative pressure to the flow cell via the waste fluid outlet.

9. A method of analyzing a sample, the method comprising:
introducing a particulate sample from a sample container into an analyzing flow cytometer comprising:
a flow cell comprising:
a sample line inlet;
a sheath fluid injection port; and
a waste fluid outlet;
a sample line coupled to the sample line inlet and configured to receive a sample from a sample container;
a sheath line coupled to the sheath fluid injection port and configured to transmit sheath fluid from a sheath fluid container to the sheath fluid injection port;
a first pump fluidically coupled to the waste fluid outlet;
a second pump fluidically coupled to the sheath line; and
a controller configured to direct the first pump, the second pump, or both to bidirectionally transmit sheath fluid through the sample line; and
flow cytometrically analyzing the particulate sample.

10. The method according to Claim 9, wherein the controller is configured to alternate pressure from the first pump and the second pump to bidirectionally transmit sheath fluid through the sample line.

11. The method according to Claim 10, further comprising:
bidirectionally transmitting sheath fluid through the sample line, preferably
wherein bidirectionally transmitting sheath fluid through the sample line comprises directing the controller to bidirectionally transmit sheath fluid through the sample line.

12. The method according to any one of Claims 9-11, further comprising:
introducing a second particulate sample from a second sample container into the flow cytometer comprising; and
flow cytometrically analyzing the second sample.

13. The method according to any one of Claims 9-12, further comprising a valve fluidically coupled to the first pump or the second pump, wherein the controller is further configured to direct the valve to alternate pressure from the first pump and the second pump to bidirectionally transmit sheath fluid through the sample line.

14. The method according to any one of Claims 9-13, wherein the controller directs the first pump, the second pump, or both to apply positive and negative pressure to bidirectionally transmit sheath fluid through the sample line.

15. The method according to any one of Claims 9-14, wherein the controller directs the second pump to apply a positive pressure to the sheath line.
